(19) Europäisches Patentamt / European Patent Office / Office européen des brevets

(11) **EP 4 361 891 A1**

(12) **EUROPEAN PATENT APPLICATION**

(43) Date of publication:
**01.05.2024 Bulletin 2024/18**

(21) Application number: **23206520.1**

(22) Date of filing: **27.10.2023**

(51) International Patent Classification (IPC):
**G06N 3/063** $^{(2023.01)}$   **G06N 3/0464** $^{(2023.01)}$
**G06N 3/0495** $^{(2023.01)}$

(52) Cooperative Patent Classification (CPC):
**G06N 3/063; G06F 17/16; G06N 3/0464;**
**G06N 3/0495**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.10.2022 GB 202216139**
**31.10.2022 GB 202216141**
**31.10.2022 GB 202216142**

(71) Applicant: **Imagination Technologies Limited**
**Kings Langley**
**Hertfordshire WD4 8LZ (GB)**

(72) Inventors:
• **YANG, Le**
**Hertfordshire, WD4 8LZ (GB)**
• **AHMADI, Aria**
**Hertfordshire, WD4 8LZ (GB)**
• **DIKICI, Cagatay**
**Hertfordshire, WD4 8LZ (GB)**

(74) Representative: **Elkington and Fife LLP**
**Prospect House**
**8 Pembroke Road**
**Sevenoaks, Kent TN13 1XR (GB)**

(54) **IMPLEMENTING A SCATTER FUNCTION ON A NEURAL NETWORK ACCELERATOR**

(57)    A method of implementing a scatter operation in fixed-function hardware of a neural network accelerator is disclosed. Three or more vectors of indices are converted to sparse index tensors in a one-hot sparse format. An update tensor is generated, by applying the update values to one of the sparse index tensors (or a tensor derived from it). In some examples, an input data tensor is updated based on the update tensor. In other examples, the update tensor itself is output.

FIG. 8

EP 4 361 891 A1

**Description**

CROSS-REFERENCE TO RELATED APPLICATIONS

This application claims priority from UK patent applications 2216139.2, 2216141.8 and 2216142.6, all filed on 31 October 2022, all of which are incorporated by reference in their entirety.

TECHNICAL FIELD

The present disclosure relates to neural network accelerators. In particular, it relates to the implementation of a scatter function on a neural network accelerator.

BACKGROUND

"Gather" and "scatter" operations arise frequently when working with sparsely populated vector or tensor data in linear algebra operations. The gather operation consolidates the nonempty elements of a vector (or, more generally, matrix or tensor) into densely populated vectors - one vector holding the data elements themselves, and one or more vectors holding the indices of those elements. The scatter operation does the inverse - distributing the contents of the densely populated data vector into the original vector/matrix/tensor format again. Often, the tensor will be sparse - that is, a majority of its elements will be equal to zero. In these cases, the "dense" indexed format will tend to be more compact than the original sparse tensor. Instead of storing all of the zeros of the sparse tensor, the dense indexed format stores the indices of the nonzero elements (as well as the nonzero elements themselves). Nevertheless, it should be understood that gather and scatter operations are useful irrespective of whether the tensor data is sparse, and the "dense" indexed representation may or may not be more compact than the original tensor data.

More formally, the gather operation can be represented by the following pseudocode:

for (i = 0; i < N; ++i)

$$B[i] = A[Idx[i]];$$

Here, A is the original vector; N is the number of nonempty elements in that vector; Idx is the vector containing the indices of the nonempty elements; and B is a vector that provides a dense representation of A.

The scatter operation can be represented by the following pseudocode:

for (i = 0; i < N; ++i)

$$A'[Idx[i]] = B[i];$$

Here, A' is the reconstituted version of A.

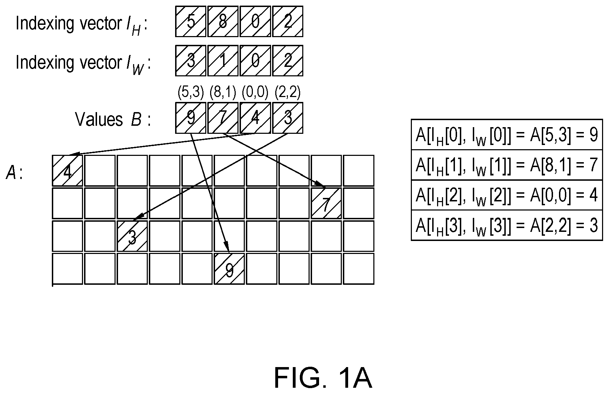

This simple 1-D example can be extended to higher dimensions. In 2-D, for example, there is still a single dense data vector B, but there are two vectors of indices - one for the indices in each dimension. Likewise, in 3-D, there is a single dense data vector, but three vectors of indices, one for each dimension. Figure 1A shows a simple example of a scatter operation in two dimensions. The vector B stores the values to be inserted in the 2-D matrix A. Horizontal indices are stored in a vector IH; vertical indices are stored in a vector IW. The values in the vector B are distributed in the matrix A according to the respective pairs of indices. Thus, for example, the first value in the vector B ("9") is stored at row 3, column 5 of the matrix A. (Here, the first row is denoted row 0 and the first column is denoted column 0.)

Scatter and gather operations can arise in any application that deals with accessing indexed locations in a tensor. For example, a tensor may describe a point cloud representing spatial data such as 3-D volumetric data. Such point clouds (which are typically sparse) may be stored as 3-D occupancy map, a 2-D occupancy map (e.g. providing a "bird's eye view"), or as a depth map associated with a particular viewpoint (for example, generated by an image + depth sensor).

These types of data are often generated in the context of robotics applications or autonomous driving assistance systems (ADAS), for instance. A point cloud may be generated by light detection and ranging (LiDAR) or other suitable depth sensor. Object detection may be performed on the point cloud using a neural network in order to identify and/or classify particular objects in the scene. The "PointPillars" network is one example of this. See Lang et al. (Alex H. Lang, Sourabh Vora, Holger Caesar, Lubing Zhou, and Jiong Yang, "PointPillars: Fast Encoders for Object Detection from Point Clouds", CVPR 2019). For another example, see Philion et al. (Jonah Philion and Sanja Fidler, "Lift, Splat, Shoot: Encoding Images from Arbitrary Camera Rigs by Implicitly Unprojecting to 3D", ECCV 2020).

If a gather operation is included in a neural network, a scatter operation will be needed at least for training of that network, for the backpropagation of error through the gather operation.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method of implementing a scatter operation in fixed-function hardware of a neural network accelerator is disclosed. One or more vectors of indices are converted to sparse index tensors in a one-hot sparse format. An update tensor is generated, by applying the update values to one of the sparse index tensors (or a tensor derived from it). In some examples, an input data tensor is updated based on the update tensor. In other examples, the update tensor itself is output.

According to a first aspect, there is provided a method of implementing a scatter operation in fixed-function hardware of a neural network accelerator, the method comprising:

receiving an input update tensor B, containing update values;
receiving a first vector of indices, containing N first indices, the first indices identifying elements of an output data tensor to be updated with the update values from the input update tensor B;
converting the first vector of indices to a first sparse index tensor $T_H$ having ones at locations defined by the indices and zeros elsewhere; and
generating an update tensor R, comprising applying the update values to the first sparse index tensor, wherein the update tensor R contains the update values at the locations defined by the indices.

This method pertains, in particular, to a one-dimensional scatter operation. In this case, the input update tensor B is an input update vector. Likewise, the update tensor R is an update vector.

In some examples, the update tensor provides the output data tensor. In particular, if there is no input data tensor, or the input data tensor is empty, the output data tensor may be set equal to the update tensor.

The method may further comprise: receiving an input data tensor A containing a plurality of input data values to be updated; and combining the input data tensor A with the update tensor R, to produce an output data tensor A', wherein values of the input data tensor are updated with the update values.

In some examples, the combining may comprise adding the values of the update tensor to respective values of the input data tensor. In other examples, the combining may comprise replacing values of the input data tensor with respective values of the update tensor.

The combining may comprise replacing values of the input data tensor A with respective values of the update tensor R, and the method may comprise: summing the first sparse index tensor TH over one dimension to calculate a reduced sparse index tensor T of the same dimensions as the input data tensor A; performing element-wise multiplication between the input data tensor A and the reduced index tensor T; and subtracting the result of the element-wise multiplication from the input data tensor A and adding the update tensor R, to produce the output data tensor A'.

Also provided according to the first aspect is a neural network accelerator configured to implement a scatter operation in fixed-function hardware, wherein the neural network accelerator is configured to:

receive an input update tensor B, containing update values;
receive a first vector of indices, containing N first indices, the first indices identifying elements of an output data tensor to be updated with the update values from the input update tensor B;
convert the first vector of indices to a first sparse index tensor $T_H$ having ones at locations defined by the indices and zeros elsewhere; and
generate an update tensor R, comprising applying the update values to the first sparse index tensor, wherein the update tensor R contains the update values at the locations defined by the indices.

The neural network accelerator may be further configured to: receive an input data tensor A containing a plurality of input data values to be updated; and combine the input data tensor A with the update tensor R, to produce an output data tensor A', wherein values of the input data tensor are updated with the update values.

To combine the input data tensor A with the update tensor R, the neural network accelerator may be configured to replace values of the input data tensor A with respective values of the update tensor R, and the neural network accelerator may be further configured to: sum the first sparse index tensor $T_H$ over one dimension to calculate a reduced sparse index tensor T of the same dimensions as the input data tensor A; perform element-wise multiplication between the input data tensor A and the reduced index tensor T; and subtract the result of the element-wise multiplication from the input data tensor A and add the update tensor R, to produce the output data tensor A'.

The summing may be performed by one or more convolution engines of the NNA. The element-wise multiplication and/or the subtracting may be performed by an element-wise operations unit of the NNA.

According to a second aspect, there is provided a method of implementing a scatter operation in fixed-function hardware of a neural network accelerator, the method comprising:

> receiving an input update tensor B, containing update values;
> receiving a first vector of indices, containing N first indices, relating to a first dimension;
> receiving a second vector of indices, containing N second indices, relating to a second dimension, wherein the first and second indices identify elements of an output data tensor to be updated with the update values from the input update tensor B;
> converting the first vector of indices to a first sparse index tensor $T_H$ having ones at locations defined by the indices and zeros elsewhere;
> converting the second vector of indices to a second sparse index tensor Tw having ones at locations defined by the second indices and zeros elsewhere; and
> generating an update tensor R, comprising:
>
>> a first multiplication, to apply the update values to one of the first sparse index tensor and the second sparse index tensor, producing an intermediate tensor R'; and
>> a second multiplication, between the intermediate tensor R' and the other of the first sparse index tensor and the second sparse index tensor, producing the update tensor R,
>
> wherein the update tensor R contains the update values at the locations defined by the first and second indices.

This method may pertain, in particular, to a two-dimensional scatter operation.

The first multiplication may comprise an element-wise multiplication, optionally with broadcasting or repetition. One operand for the first multiplication may be the input update tensor B or a derivative thereof. The other operand for the first multiplication may be the first sparse index tensor $T_H$ or the second sparse index tensor Tw. The result of the first multiplication is an intermediate update matrix R'.

The second multiplication may comprise a matrix multiplication. A transpose operation may be applied to the remaining (that is, "other") sparse index tensor prior to the matrix multiplication.

In some examples, the update tensor provides the output data tensor. In particular, if there is no input data tensor, or the input data tensor is empty, the output data tensor may be set equal to the update tensor.

The method may further comprise: receiving an input data tensor A containing a plurality of input data values to be updated; and combining the input data tensor A with the update tensor R, to produce an output data tensor A', wherein values of the input data tensor are updated with the update values.

In some examples, the combining may comprise adding the values of the update tensor to respective values of the input data tensor. In other examples, the combining may comprise replacing values of the input data tensor with respective values of the update tensor.

The combining may comprise replacing values of the input data tensor A with respective values of the update tensor R, and the method may comprise: combining the first and second sparse index tensors $T_H$, Tw, to produce a 2-D sparse index tensor $T_{HW}$ having the same size as the input data tensor A; performing element-wise multiplication between the input data tensor A and the 2-D sparse index tensor $T_{HW}$; and subtracting the result of the element-wise multiplication from the input data tensor A and adding the update tensor R, to produce the output data tensor A'.

Combining the first and second sparse index tensors may comprise a matrix multiplication and optionally further comprises a transpose operation applied to one of the first sparse index tensor and the second sparse index tensor prior to the matrix multiplication.

The input update tensor B may contain update values for each of a plurality of elements along a third dimension, and the method may comprise, when generating the update tensor R: before the first multiplication, repeating the input update tensor B over one of the first dimension and the second dimension, to produce a repeated input update tensor B', wherein the first multiplication operates on the repeated input update tensor B'; and the second multiplication may comprise a batch matrix multiplication.

This method updates all values along the third dimension, at the 2-D locations defined by the first indices and second indices. The method may pertain, in particular, to a 2-D all-channel scatter operation.

The method may further comprise: receiving an input data tensor A containing a plurality of input data values to be updated; and combining the input data tensor A with the update tensor R, to produce an output data tensor A', wherein values of the input data tensor are updated with the update values.

In some examples, the combining may comprise adding the values of the update tensor to respective values of the input data tensor. In other examples, the combining may comprise replacing values of the input data tensor with respective values of the update tensor.

The combining may comprise replacing values of the input data tensor A with respective values of the update tensor R, and the method may comprise: combining the first and second sparse index tensors $T_H$, Tw, to produce a 2-D sparse index tensor $T'_{HW}$; repeating the 2-D sparse index tensor $T'_{HW}$; over the third dimension to produce a 3-D sparse index tensor $T_{HW}$; performing element-wise multiplication between the input data tensor A and the 3-D sparse index tensor $T_{HW}$; and subtracting the result of the element-wise multiplication from the input data tensor A and adding the update tensor R, to produce the output data tensor A'.

The 3-D sparse index tensor $T_{HW}$; has the same size as the input data tensor A.

Also provided according to the second aspect is a neural network accelerator configured to implement a scatter operation in fixed-function hardware, wherein the neural network accelerator is configured to:

> receive an input update tensor B, containing update values;
> receive a first vector of indices, containing N first indices, relating to a first dimension;
> receive a second vector of indices, containing N second indices, relating to a second dimension, wherein the first and second indices identify elements of an output data tensor to be updated with the update values from the input update tensor B;
> convert the first vector of indices to a first sparse index tensor $T_H$ having ones at locations defined by the indices and zeros elsewhere;
> convert the second vector of indices to a second sparse index tensor Tw having ones at locations defined by the second indices and zeros elsewhere; and
> generate an update tensor R, comprising:
>
>> a first multiplication, to apply the update values to one of the first sparse index tensor and the second sparse index tensor, producing an intermediate tensor R'; and
>> a second multiplication, between the intermediate tensor R' and the other of the first sparse index tensor and the second sparse index tensor, producing the update tensor R,
>
> wherein the update tensor R contains the update values at the locations defined by the first and second indices.

The first multiplication may be performed using an element-wise operations unit of the NNA. The second multiplication may be performed by one or more convolution engines of the NNA.

The neural network accelerator may be further configured to: receive an input data tensor A containing a plurality of input data values to be updated; and combine the input data tensor A with the update tensor R, to produce an output data tensor A', wherein values of the input data tensor are updated with the update values.

To combine the input data tensor A with the update tensor R, the neural network accelerator may be configured to replace values of the input data tensor A with respective values of the update tensor R, and the neural network accelerator may be further configured to: combine the first and second sparse index tensors $T_H$, $T_W$, to produce a 2-D sparse index tensor $T_{HW}$ having the same size as the input data tensor A; perform element-wise multiplication between the input data tensor A and the 2-D sparse index tensor $T_{HW}$; and subtract the result of the element-wise multiplication from the input data tensor A and add the update tensor R, to produce the output data tensor A'.

Combining the first and second sparse index tensors may comprise a matrix multiplication and optionally further comprises a transpose operation applied to one of the first sparse index tensor and the second sparse index tensor prior to the matrix multiplication. The element-wise multiplication and the subtracting may be performed by an element-wise operations unit of the NNA. The matrix multiplication may be performed by one or more convolution engines of the NNA. The transpose may be performed by a memory manipulation module.

The input update tensor B may contain update values for each of a plurality of elements along a third dimension, and the neural network accelerator may be configured to, when generating the update tensor R, before the first multiplication, repeat the input update tensor B over one of the first dimension and the second dimension, to produce a repeated input update tensor B', wherein the first multiplication operates on the repeated input update tensor B'. The second multiplication may comprise a batch matrix multiplication.

The repeating may be performed using a memory manipulation module. The batch matrix multiplication may be performed using one or more convolution engines of the NNA.

The neural network accelerator may be further configured to: receive an input data tensor A containing a plurality of input data values to be updated; and combine the input data tensor A with the update tensor R, to produce an output data tensor A', wherein values of the input data tensor are updated with the update values.

To combine the input data tensor A with the update tensor R, the neural network accelerator may be configured to replace values of the input data tensor A with respective values of the update tensor R, and the neural network accelerator may be configured to: combine the first and second sparse index tensors $T_H$, $T_W$, to produce a 2-D sparse index tensor $T'_{HW}$; repeat the 2-D sparse index tensor $T'_{HW}$; over the third dimension to produce a 3-D sparse index tensor $T_{HW}$; perform element-wise multiplication between the input data tensor A and the 3-D sparse index tensor $T_{HW}$; and subtract the result of the element-wise multiplication from the input data tensor A and add the update tensor R, to produce the output data tensor A'.

The repeating may be performed using a memory manipulation module. The element-wise multiplication and the subtracting may be performed using an element-wise operations unit of the NNA.

According to a third aspect, there is provided a method of implementing a scatter operation in fixed-function hardware of a neural network accelerator, the method comprising:

> receiving an input update tensor B, containing update values;
> receiving a first vector of indices, containing N first indices, relating to a first dimension;
> receiving a second vector of indices, containing N second indices, relating to a second dimension;
> receiving a third vector of indices, containing N third indices, relating to a third dimension, wherein the first, second, and third indices identify elements of an output data tensor to be updated with the update values from the input update tensor B;
> converting the first vector of indices to a first sparse index tensor $T_H$ having ones at locations defined by the indices and zeros elsewhere; and
> converting the second vector of indices to a second sparse index tensor $T_W$ having ones at locations defined by the second indices and zeros elsewhere;
> converting the third vector of indices to a third sparse index tensor $T_C$ having ones at locations defined by the second indices and zeros elsewhere;
>
> generating a first 2-D sparse index tensor $T^{hw}_{HW1}$, comprising a first multiplication between the first sparse index tensor $T_H$ and the second sparse index tensor $T_W$;
>
> generating a 2-D update tensor $T^{wc}_{1WC}$ incorporating the update values, comprising:
>
> > a second multiplication, to apply the update values to one of the second sparse index tensor $T_W$ and the third sparse index tensor $T_C$, producing an intermediate tensor R', and
> > a third multiplication, between the intermediate tensor R' and the other of the second sparse index tensor $T_W$
> >
> > and the third sparse index tensor $T_C$, producing the 2-D update tensor $T^{wc}_{1WC}$
>
> generating a second 2-D sparse index tensor $T^{hc}_{H1C}$, comprising a fourth multiplication between the first sparse index tensor $T_H$ and the third sparse index tensor $T_C$; and
> generating an update tensor R, comprising at least one element-wise multiplication between the first 2-D sparse index tensor, the second 2-D sparse index tensor, and the 2-D update tensor,
> wherein the update tensor R contains the update values at the locations defined by the first, second and third indices.

This method pertains, in particular, to a three-dimensional scatter operation.

The first multiplication may comprise a matrix multiplication. Generating the first 2-D sparse index tensor may further comprise a transpose operation applied to one of the first sparse index tensor and the second sparse index tensor prior to the first multiplication.

The second multiplication may comprise an element-wise multiplication. The third multiplication may comprise a matrix multiplication. Generating the 2-D update tensor optionally further comprises a transpose operation applied to one of the second sparse index tensor and the third sparse index tensor prior to the third multiplication.

The fourth multiplication may comprise a matrix multiplication. Generating the second 2-D sparse index tensor may further comprise a transpose operation applied to one of the first sparse index tensor and the third sparse index tensor prior to the fourth multiplication.

Generating the update tensor R may comprise repeating one or more of the tensors prior to the at least one element-wise multiplication. In particular, the first 2-D sparse index tensor may be repeated along the third dimension; the 2-D update tensor may be repeated along the first dimension; and the second sparse index tensor may be repeated along the second dimension. Alternatively, in some examples, the element-wise multiplication may be performed using broadcasting and it is unnecessary to repeat the tensors explicitly.

The method may further comprise: receiving an input data tensor A containing a plurality of input data values to be updated; and combining the input data tensor A with the update tensor R, to produce an output data tensor A', wherein values of the input data tensor are updated with the update values.

In some examples, the combining may comprise adding the values of the update tensor to respective values of the input data tensor. In other examples, the combining may comprise replacing values of the input data tensor with respective values of the update tensor.

The combining may comprise replacing values of the input data tensor A with respective values of the update tensor R, and the method may comprise: combining the second and third sparse index tensors $T_W$, $T_C$, to produce a third 2-D sparse index tensor $T_{WC}$; combining the first, second, and third 2-D sparse index tensors $T_{HW1}^{hw}$, Twc, $T_{H1C}^{hc}$ to calculate an intermediate tensor $T_{HWC}$; performing element-wise multiplication between the input data tensor A and the intermediate tensor $T_{HWC}$; and subtracting the result of the element-wise multiplication from the input data tensor A and adding the update tensor R, to produce the output data tensor A'.

Combining the second and third sparse index tensors may comprise a matrix multiplication and optionally further comprises a transpose operation applied to one of the second sparse index tensor and the third sparse index tensor prior to the matrix multiplication.

Combining the first, second, and third 2-D sparse index tensors may comprise element-wise multiplications.

Optionally, prior to the element-wise multiplication, each 2-D sparse index tensor may be repeated over the dimension in which it has a size equal to 1. In each case, the repeating may produce a tensor having the same size as the input data tensor A (and likewise the output data tensor A', which is the same size as the input data tensor). Alternatively, in some examples, the element-wise multiplication may be performed using broadcasting and the repeating may be unnecessary.

Also provided according to the third aspect is a neural network accelerator configured to implement a scatter operation in fixed-function hardware, wherein the neural network accelerator is configured to:

receive an input update tensor B, containing update values;
receive a first vector of indices, containing N first indices, relating to a first dimension;
receive a second vector of indices, containing N second indices, relating to a second dimension;
receive a third vector of indices, containing N third indices, relating to a third dimension, wherein the first, second, and third indices identify elements of an output data tensor to be updated with the update values from the input update tensor B;
convert the first vector of indices to a first sparse index tensor $T_H$ having ones at locations defined by the indices and zeros elsewhere; and
convert the second vector of indices to a second sparse index tensor $T_W$ having ones at locations defined by the second indices and zeros elsewhere;
convert the third vector of indices to a third sparse index tensor $T_C$ having ones at locations defined by the second indices and zeros elsewhere;

generate a first 2-D sparse index tensor $T_{HW1}^{hw}$, comprising a first multiplication between the first sparse index tensor $T_H$ and the second sparse index tensor $T_W$;

generate a 2-D update tensor $T_{1WC}^{wc}$ incorporating the update values, comprising:

a second multiplication, to apply the update values to one of the second sparse index tensor Tw and the third sparse index tensor Tc, producing an intermediate tensor R', and
a third multiplication, between the intermediate tensor R' and the other of the second sparse index tensor $T_W$ and the third sparse index tensor $T_C$, producing the 2-D update tensor $T_{1WC}^{wc}$;

generate a second 2-D sparse index tensor $T_{H1C}^{hc}$, comprising a fourth multiplication between the first sparse index tensor $T_H$ and the third sparse index tensor $T_C$; and
generate an update tensor R, comprising at least one element-wise multiplication between the first 2-D sparse index tensor, the second 2-D sparse index tensor, and the 2-D update tensor,
wherein the update tensor R contains the update values at the locations defined by the first, second and third indices.

The first multiplication may comprise a matrix multiplication. Generating the first 2-D sparse index tensor may further comprise a transpose operation applied to one of the first sparse index tensor and the second sparse index tensor prior to the first multiplication.

The second multiplication may comprise an element-wise multiplication. The third multiplication may comprise a matrix multiplication. Generating the 2-D update tensor optionally further comprises a transpose operation applied to one of the second sparse index tensor and the third sparse index tensor prior to the third multiplication.

The fourth multiplication may comprise a matrix multiplication. Generating the second 2-D sparse index tensor may further comprise a transpose operation applied to one of the first sparse index tensor and the third sparse index tensor prior to the fourth multiplication.

The first, third, and fourth multiplications may be performed using one or more convolution engines of the NNA. The second multiplication may be performed using an element-wise operations unit of the NNA. Any transpose operation may be performed using a memory manipulation module.

Generating the update tensor R may comprise repeating one or more of the tensors prior to the at least one element-wise multiplication. In particular, the first 2-D sparse index tensor may be repeated along the third dimension; the 2-D update tensor may be repeated along the first dimension; and the second sparse index tensor may be repeated along the second dimension. Alternatively, in some examples, the element-wise multiplication may be performed using broadcasting and it is unnecessary to repeat the tensors explicitly. Repeating any tensor may be performed using a memory manipulation module.

The neural network accelerator may be further configured to: receive an input data tensor A containing a plurality of input data values to be updated; and combine the input data tensor A with the update tensor R, to produce an output data tensor A', wherein values of the input data tensor are updated with the update values.

To combine the input data tensor A with the update tensor R, the neural network accelerator may be configured to replace values of the input data tensor A with respective values of the update tensor R, and the neural network accelerator may be configured to: combine the second and third sparse index tensors $T_W$, $T_C$, to produce a third 2-D sparse index tensor $T_{WC}$; combine the first, second, and third 2-D sparse index tensors $T_{HW1}^{hw}$, $T_{WC}$, $T_{H1C}^{hc}$ to calculate an intermediate tensor $T_{HWC}$; perform element-wise multiplication between the input data tensor A and the intermediate tensor $T_{HWC}$; and subtract the result of the element-wise multiplication from the input data tensor A and add the update tensor R, to produce the output data tensor A'.

To combine the second and third sparse index tensors, the neural network accelerator may be configured to perform a matrix multiplication and optionally further configured to perform a transpose operation applied to one of the second sparse index tensor and the third sparse index tensor prior to the matrix multiplication.

The matrix multiplication may be performed using one or more convolution engines of the NNA. The transpose operation may be performed using a memory manipulation module.

To combine the first, second, and third 2-D sparse index tensors, the neural network accelerator may be configured to perform element-wise multiplications between them.

The element-wise multiplications may be performed using an element-wise operations unit of the NNA. Optionally, prior to the element-wise multiplication, each 2-D sparse index tensor may be repeated over the dimension in which it has a size equal to 1. In each case, the repeating may produce a tensor having the same size as the input data tensor A (and likewise the output data tensor A', which is the same size as the input data tensor). The repeating may be performed using a memory manipulation module. Alternatively, in some examples, the element-wise multiplication may be performed using broadcasting and the repeating may be unnecessary.

Converting each vector of indices to a respective sparse index tensor $T_H$, $T_W$, $T_C$ optionally comprises: generating a progressively descending matrix ($b_H$), in which each row, column, or channel comprises an arithmetic sequence from zero, in increments of negative one; performing element-wise addition between the progressively descending matrix ($b_H$) and the index vector ($I_H$), using broadcasting or repetition; and applying a delta function to the result ($I'_H$) of the element-wise addition, to construct the sparse index matrix ($T_H$).

Each row (or column, or channel) of the progressively descending matrix has a length equal to the length of the input data tensor in the relevant dimension. The number of rows (or columns or channels) is equal to the number of locations to be updated.

The delta function returns a value of one for an input of zero, and returns zero for all other inputs.

Applying the delta function optionally comprises: a first clamp operation, clamping between a minimum of 0 and a maximum of 1; a second clamp operation, clamping between a minimum of -1 and a maximum of 0; a first subtraction operation, subtracting the result of the second clamp operation from the result of the first clamp operation; and a second subtraction operation, subtracting from 1 each element of the result of the first subtraction.

Each clamp operation may be performed by an activation unit of the neural network accelerator. Each subtraction operation may be performed by an element-wise operations unit of the neural network accelerator.

The neural network accelerator may comprise: a plurality of convolution engines; an element-wise operations unit; and an activation unit, wherein at least one or any combination of two or more of the following is true: each element-wise operation is performed using the element-wise operations unit; each matrix multiplication is performed using the plurality of convolution engines; each step of summing over one dimension is performed using the plurality of convolution engines; each delta function is performed using the activation unit.

The neural network accelerator may comprise a memory manipulation module, wherein each transpose operation, each permute operation, and each repeat operation is performed using the memory manipulation module.

The method may further comprise processing each 2-D sparse index tensor to ensure it is binary-valued. Constraining the 2-D sparse index tensors to be binary (having values 0 and 1) can help the method to cope gracefully with duplicated indices. If the first (and optionally second and third) vectors of indices contain duplicated indices, this may give rise to unpredictable behaviour. The inventors have recognised that duplicated indices result in values in the 2-D sparse index tensors that are greater than 1. Thus, by forcing these tensors to be binary, some unpredictable behaviour may be avoided. Processing each 2-D sparse index tensor may comprise applying a clamp function to clamp values of the tensor a range from 0 to 1.

The method may further comprise processing each sparse index tensor to do one of: select the first non-zero element in each row, while suppressing other non-zero elements in the row; and select the last non-zero element in each row, while suppressing other non-zero elements in the row.

Selecting the first or last nonzero element may comprise convolution with a convolution kernel. The convolution kernel may comprise or consist of: (i) a linearly increasing or decreasing sequence of values, with a size equal to the length of each row, and (ii) zero-padding. The selecting may further comprise: subtracting 1 from each element of the result of the convolution; and applying a delta function to the result of the subtracting.

In some examples, the scatter operation may form part of a method of processing 3-D volumetric data, image data, or video data, and/or the scatter operation may be used for steganography or watermarking. (All combinations of the foregoing being hereby disclosed.)

Accordingly, the method may further comprise capturing the 3-D volumetric data via a sensor, or receiving the 3-D volumetric data captured previously via a sensor (or capturing image or video data by an image sensor, or receiving image or video data captured previously by an image sensor). The 3-D volumetric data may comprise an occupancy map or point cloud. The sensor may comprise a depth sensor, such as a LiDAR sensor. The processing of the 3-D volumetric data may comprise object detection using a neural network. The 3-D volumetric data may be sparse - that is, a majority of the data may be filled with zeros. A minority of the data may contain nonzero values. The processing of image or video data may comprise inpainting or warping, for example.

Steganography refers generally to concealing information within the input data or within a portion of the input data. Watermarking refers to embedding information in the input data (in either concealed or non-concealed form), typically for the purposes of content protection, authentication, or tamper detection.

Also provided is a neural network accelerator configured to perform any of the methods as summarised above. The neural network accelerator may be embodied in hardware on an integrated circuit.

Also provided is a method of manufacturing, using an integrated circuit manufacturing system, a neural network accelerator as summarised above.

Also provided is a method of manufacturing, using an integrated circuit manufacturing system, a neural network accelerator as summarised above, the method comprising: processing, using a layout processing system, a computer readable description of the neural network accelerator so as to generate a circuit layout description of an integrated circuit embodying the neural network accelerator; and manufacturing, using an integrated circuit generation system, the neural network accelerator according to the circuit layout description.

Further provided is computer readable code configured to cause one or more of the methods summarised above to be performed when the code is run. Additionally provided is a computer readable storage medium having encoded thereon the computer readable code. The computer readable storage medium may be non-transitory.

Still further provided is an integrated circuit definition dataset that, when processed in an integrated circuit manufacturing system, configures the integrated circuit manufacturing system to manufacture a neural network accelerator as summarised above.

Also provided is a computer readable storage medium (optionally non-transitory) having stored thereon a computer readable description of a neural network accelerator as summarised above that, when processed in an integrated circuit manufacturing system, causes the integrated circuit manufacturing system to manufacture an integrated circuit embodying the neural network accelerator.

Further provided is a computer readable storage medium (optionally non-transitory) having stored thereon a computer readable description of a graphics processing system as summarised above, which, when processed in an integrated circuit manufacturing system, causes the integrated circuit manufacturing system to: process, using a layout processing system, the computer readable description of the neural network accelerator so as to generate a circuit layout description of an integrated circuit embodying the neural network accelerator; and manufacture, using an integrated circuit generation system, the neural network accelerator according to the circuit layout description.

Also provided is an integrated circuit manufacturing system configured to manufacture a neural network accelerator as summarised above.

Further provided is an integrated circuit manufacturing system comprising: a computer readable storage medium (optionally non-transitory) having stored thereon a computer readable description of a neural network accelerator as summarised above; layout processing system configured to process the computer readable description so as to generate a circuit layout description of an integrated circuit embodying the neural network accelerator; and an integrated circuit generation system configured to manufacture the neural network accelerator according to the circuit layout description.

The layout processing system may be configured to determine positional information for logical components of a circuit derived from the integrated circuit description so as to generate a circuit layout description of an integrated circuit embodying the neural network accelerator.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1A shows an example of a 2-D scatter operation

Figure 1B shows a general methodology, according to examples of the present disclosure, for implementing a scatter operation;

Figure 2 is a block diagram of a hardware accelerator comprising fixed-function hardware, according to an example of the present disclosure;

Figure 3 is a block diagram of a convolution engine as used in Figure 2;

Figure 4 is a block diagram of a data processing system according to an example;

Figure 5A illustrates an implementation of a 1-D scatter operation according to an example;

Figure 5B illustrates an implementation of applying a delta function, according to an example;

Figure 6A illustrates an exemplary implementation of an update operation that replaces elements of the input data tensor with update values;

Figure 6B illustrates an exemplary implementation of an update operation that adds update values to elements of the input data tensor;

Figure 7 illustrates an implementation of a 2-D scatter operation according to an example;

Figure 8 illustrates an implementation of a 3-D scatter operation according to an example;

Figure 9 illustrates an implementation of a 2-D all-channel scatter operation according to an example;

Figure 10 shows aspects of an instance of the implementation of Figure 9 in greater detail;

Figure 11 shows a batch matrix multiplication, as used in the implementation of Figure 9, in greater detail;

Figure 12 shows a computer system in which a neural network accelerator is implemented; and

Figure 13 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As scatter and gather operations are not used in conventional convolutional neural networks, it is common that neural network accelerators (NNAs) do not provide hardware support for these operations. An exemplary NNA architecture (described in more detail below) does not support indexing and does not offer an efficient implementation of "for" loops. Consequently, it may be difficult or impossible to implement scatter, in particular, efficiently on such an NNA.

It would be desirable to implement a scatter operation on an NNA in a manner that is efficient, thereby avoiding the need to recruit another hardware unit, such as a GPU or CPU, to perform this operation.

Examples according to the present disclosure implement a scatter operation as a combination of elementary neural network operations available on the NNA. The present disclosure will consider a scatter operation having the general form of an "update" to an existing data vector/tensor. The form of this "update" depends on the task. It might involve replacing certain elements of the existing tensor, adding values to elements of the existing tensor, or another arithmetical or logical update.

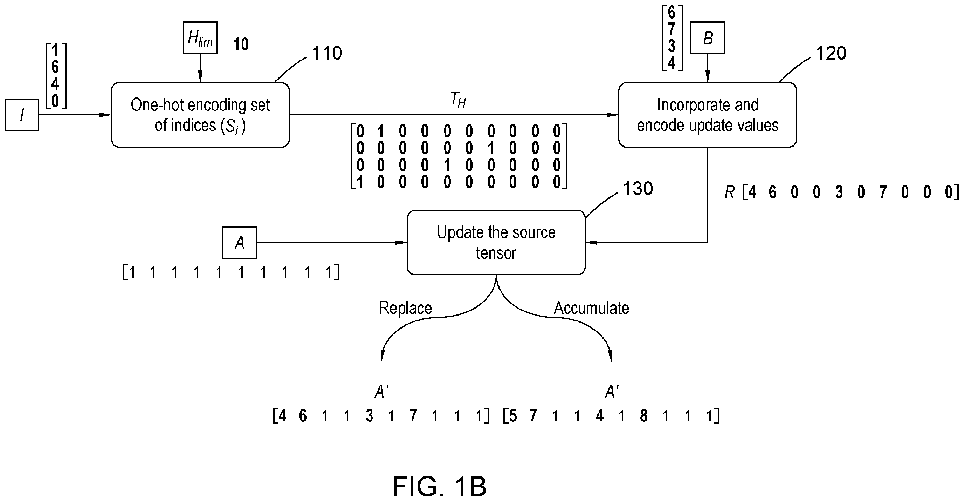

An exemplary method for a 1-D scatter involves three stages, as illustrated in Figure 1B. Firstly, in step 110, the index vector, I, is converted to a one-hot encoding. This produces a sparse index tensor, TH, having ones at locations defined by the indices and zeros elsewhere. Each row relates to one of the indices. Each row has as many elements as the length of the input data vector, A. Most of the elements of the sparse index tensor are equal to zero. In each row, only the element at the position defined by the respective index value is non-zero. This element is set equal to one. Note that the input data vector A may also be sparse, but this is not a requirement.

Secondly, in step 120, the values (from the input update vector, B) are combined with the sparse index tensor, TH, to produce an update vector, R. The update vector, R, has the data values embedded in the appropriate positions to be updated. The other positions are equal to zero.

The third stage (step 130) involves updating the input data vector A using the update vector R (using the appropriate operation - accumulate, replace, etc.). The result is an output data vector A', in which the appropriate elements have been updated with the update values from B.

Although the example of Figure 1B involves just one dimension, similar principles can be applied in higher dimensions (as will be explained in further detail below). In each case, the three inputs are:

- Input data: a tensor A from which some elements are accessed through (sparse) indexing.

- Indices: vectors $I_H$, $I_W$, $I_C$, which hold the indices for height, width, and channel dimensions, respectively.

- Updates: a tensor $B$, which holds the values to be used to update A.

The sole output is:

- Output data: a modified version $A'$ of the tensor $A$ in which some values are updated.

First, an exemplary hardware accelerator on which the scatter operation can be implemented will be described.

**Exemplary hardware accelerator**

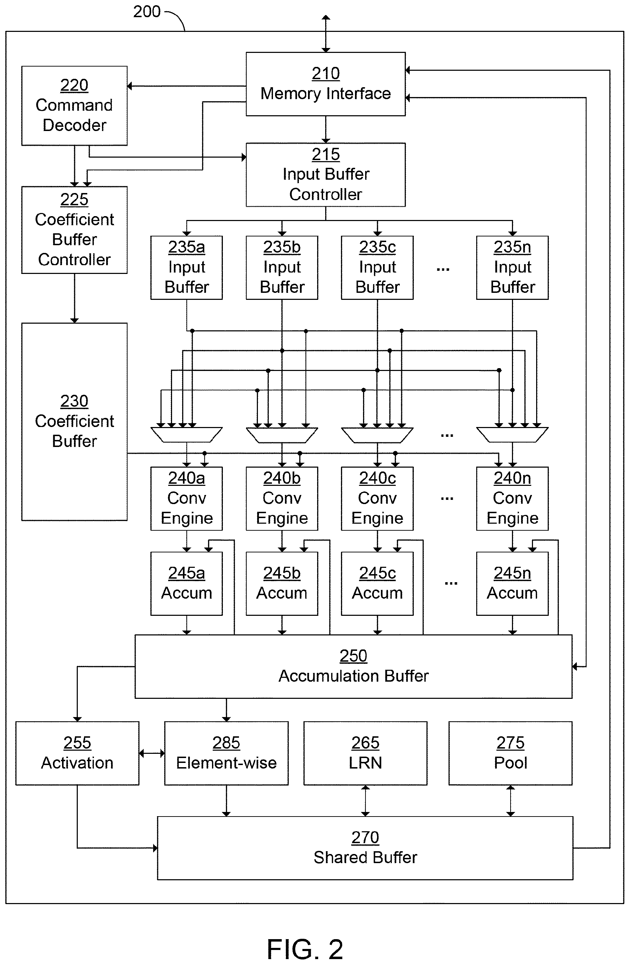

As shown in Figure 2, an exemplary hardware accelerator 200 (also referred to herein as a neural network accelerator or NNA) includes the following fixed-function hardware units:

- A set of convolution engines 240, specialised at convolution operations;
- An element-wise operations unit 285, specialised at performing the same operation to every pair of respective elements of two tensors of corresponding size;
- An activation unit 255, specialised at applying an activation function (which may be selectable, configurable, or fully programmable) to every element of a tensor;
- A local response normalisation (LRN) unit 265 (or normalisation unit, for short), specialised at performing neighbourhood-based normalisation operations; and
- A pooling unit 275, specialised at performing pooling operations, such as max-pooling and min-pooling.

In greater detail, the hardware accelerator 200 comprises digital logic circuitry that is configured to receive data (including weights and input tensors) and commands for processing them. The hardware accelerator 200 comprises a memory interface 210, an input buffer controller 215, a command decoder 220, a coefficient buffer controller 225, a coefficient buffer 230, *n* input buffers 235, *n* convolution engines 240, *n* accumulators 245, an accumulation buffer 250, an activation unit 255, a local response normalize (LRN) unit 265, a shared buffer 270, a pooling unit 275, and an element-wise operations unit 285. The hardware accelerator 200 can be used to evaluate elementary neural network operations.

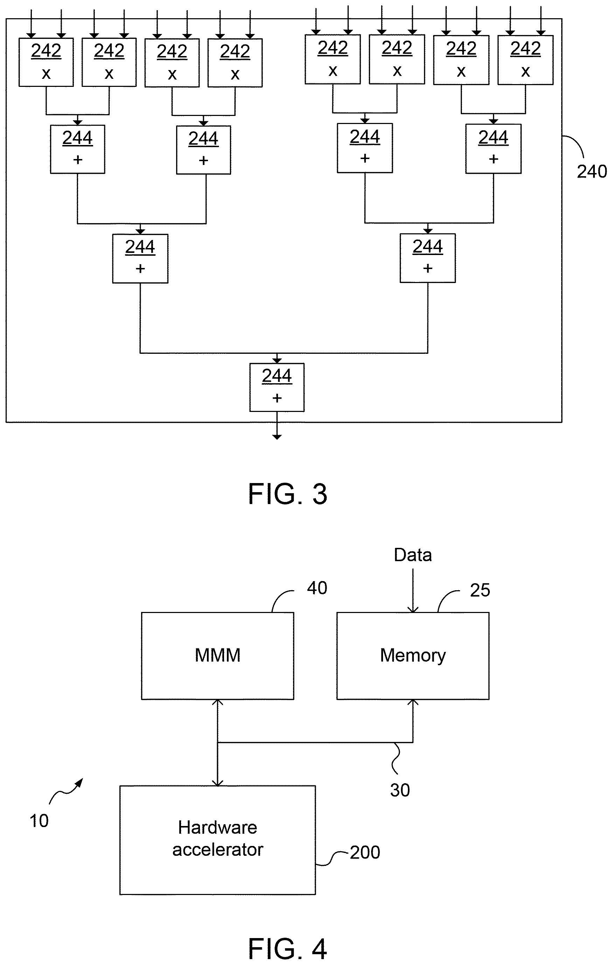

The memory interface 210 is configured to provide an interface between the hardware accelerator 200 and external memory 25 (not shown in Fig. 2, but shown in e.g. Fig. 4). The external memory 25 may be considered as a separate module to the hardware accelerator 200. The command or configuration information may comprise, for example, information regarding weight and data size and format as well as their location in the external memory.

The memory interface 210 is configured to receive, from external memory 25, weights and data to be used in calculations within the neural network, as well as command information to control the operation of the hardware accelerator 200. The received weights (also referred to herein as coefficients) are passed to the coefficient buffer controller 225 and the received data is passed to the input buffer controller 215. The received commands are passed to the command decoder 220, which, in turn, is configured to decode the commands and subsequently issue control information to elements of the hardware accelerator, including the coefficient buffer controller 225 and input buffer controller 215 to control the manner in which the weight and input data is stored in the buffers.

The weights and input data received from external memory via memory interface 210 during a read of the external memory may form the weights and input data for only a portion of a single layer, all of the weights and input data to be used in processing a single layer, or may comprise the weights and input data for processing multiple layers.

In practice, the number of weights and data received in a single read from external memory 25 will depend upon the size of the coefficient buffer 230 and the input buffer 235. The weights are passed from the coefficient buffer controller 225 to the coefficient buffer 230 and the data received is passed from the input buffer controller 215 to a plurality of input buffers 235a-235n. The number of input buffers will depend upon the specific implementation of the accelerator 200 but may take any value. The input data is shared across all of the input buffers 235a-235n. The input buffers each form an effective bank such that the number of input buffers can be increased or decreased depending on the application.

The input buffers 235a-235n are connected to each of a plurality of multiplexers, since each convolution engine 240a-240n requires access to all of the effective 'banks' of the input data. The multiplexers are each configured to select an output from one of the input buffers 235 and to pass the values output from the selected input buffer 235 to a respective convolution engine 240a-240n. In addition, weights from the coefficient buffer 230 are provided as a second input into each convolution engine 240a-240n. The convolution engines 240 are configured to perform a convolution calculation on the received input data using the weights received from the coefficient buffer 230. The resultant output of each convolution engine 240a-240n is provided as an input to a respective accumulator of a plurality of accumulators 245a-245n.

Each accumulator 245a-245n is connected to an accumulation buffer 250. The accumulation buffer 250 is configured to store accumulated results received from each accumulator 245a-245n. The accumulation buffer 250 is connected to the memory interface 210. As such, the accumulation buffer 250 is configured to send and receive data to and from external memory 25 via memory interface 210. Specifically, the accumulation buffer 250 is configured to be able to store and restore its values from the external memory 25 via memory interface 210, as will be described in more detail below. The accumulation buffer 250 is connected to the input of the accumulators 245a-245n and is configured to feed values back into the accumulators 245a-245n to enable accumulation calculations to take place.

The accumulation buffer 250 is configured to pass accumulated values to the activation unit 255 and/or the element-wise operations unit 285. The activation unit 255 is configured to perform at least one of a number of different activation functions.

The resultant value calculated by the activation unit 255 can be passed to be processed by the LRN unit 265 and/or the pooling unit 275 via the shared buffer 270. The LRN unit 265 is configured to perform a local response normalisation. This may be performed within a single plane of input data. Alternatively or in addition, the LRN operation may also be performed across planes.

A result stored in the shared buffer 270 is passed to the memory interface 210, which can either store the result in external memory 25 or pass the result back into the input buffers for further processing without having to first be passed out to external memory.

The shared buffer 270 is configured to buffer values from any one or more of the activation unit 255, the LRN unit 265, the pooling unit 275, and the element-wise operations unit 285 until all the values required to perform the next operation are available. In this way, the shared buffer 270 is used for efficiency of storage as it can hold values required in later operations without having to use external memory 25.

The element-wise operations unit 285 comprises circuitry configured to perform element-wise operations on tensors received from the accumulation buffer 250 and/or activation unit 255. The supported element-wise operations may include element-wise addition, subtraction, multiplication, division, and maximum (or minimum) of the respective elements of the tensors.

Element-wise operations are operations that are repeated for multiple elements of at least one tensor. The operations are typically repeated for all elements of the tensor. Two categories of element-wise operation may be considered: unary operations, having a single operand, and binary operations, having two operands. The element-wise operations unit 285 handles binary element-wise operations. Element-wise operations may also be performed by other components of the hardware accelerator. For example, the activation unit 255 may perform unary element-wise operations, by applying a function to every element of a tensor.

Whilst the hardware accelerator of Figure 2 illustrates a particular order in which the units are arranged and thus how the processing of data flows through the hardware implementation, it will be appreciated that the specific calculations required and the order in which data is processed across layers may vary.

In some examples of evaluating neural network layers, the functions performed by the activation 255, LRN 265, pooling 275, and element-wise 285 units may all be performed. In other examples, only some of these functions may be performed and not necessarily in the order set out in the hardware accelerator 200. To achieve a configurable order of processing these functions, each of the activation 255, LRN 265, pooling 275 and element-wise 285 units may be configured to receive control signalling configuring the unit into a bypass mode in which the function is not performed and the input values are simply passed through the unit without change.

Advantageously, since the activation, LRN, pooling, and element-wise units 255, 265, 275, 285 are placed linearly, it is possible to perform these operations sequentially without having to retrieve data from external memory 25. In some implementations, the order in which the activation, LRN, pooling, and element-wise units 255, 265, 275, 285 are connected may vary. For example, the activation, LRN, and pooling units 255, 265, 275 may be connected in reverse order such that the pooling unit is connected to the accumulation buffer 250 and the activation unit is connected to the memory interface 210.

Figure 3 illustrates the structure of each of the convolution engines 240 in Figure 2. The convolution engine 240 comprises a plurality of elements of multiply logic 242, each configured to multiply a weight by an input data element, and a plurality of elements of addition logic 244, configured in a tree structure to sum the outputs of the elements of multiply logic 242.

## Exemplary data processing system

Figure 4 is a block diagram of a data processing system 10 for implementing a neural network containing a scatter operation in a hardware accelerator 200 (NNA), according to an example. The data processing system comprises the hardware accelerator 200; a memory 25; and a memory manipulation module (MMM) 40. The hardware accelerator 200, the memory 25, and the MMM 40 are connected by a data bus 30.

The hardware accelerator 200 is configured to evaluate a neural network including a scatter operation. The MMM 40 is configured to manipulate multidimensional data in memory in various ways, including permute operations that modify the order of the dimensions of the data. Details of an exemplary MMM can be found in UK patent GB 2592087.

## 1-D example

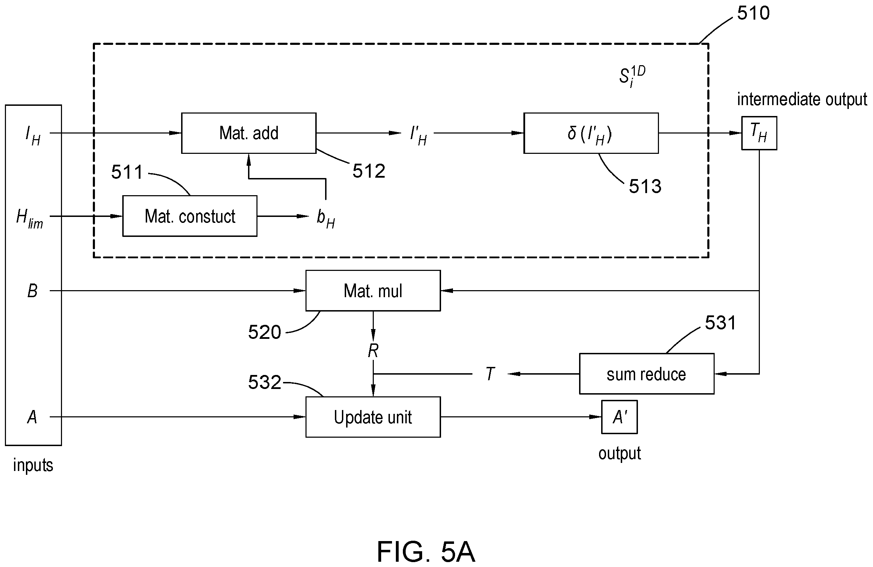

As mentioned above, the basic principles outlined in Figure 1B can be applied in any number of dimensions. A one-dimensional example will now be described in greater detail. Figure 5A elaborates on the flowchart of Figure 1B, illustrating an exemplary implementation of a 1-D scatter operation in more detail. The group of operations 510 corresponds broadly to the first step 110 of Figure 1B. Step 520 corresponds broadly to the second step 120 of Figure 1B; and steps 531 and 532 correspond broadly to step 130 of Figure 1B. It should be noted that $H_{lim}$ is the number of elements along the dimension H - that is, it is the length of the input data vector A.

Taking the same numerical example as illustrated in Figure 1B, we have:

$$I_H = \begin{bmatrix} 1 \\ 6 \\ 4 \\ 0 \end{bmatrix}$$

$$B = \begin{bmatrix} 6 \\ 7 \\ 3 \\ 4 \end{bmatrix}$$

$$H_{lim} = 10$$

$$A = \begin{bmatrix} 1 & 1 & 1 & 1 & 1 & 1 & 1 & 1 & 1 & 1 \end{bmatrix}$$

In step 511, the hardware accelerator constructs a matrix $b_H$ that has a number of columns equal to the length $H_{lim}$ and a number of rows equal to the number of elements to be updated (that is, the length of the input update vector B).

$$b_H = \begin{bmatrix} 0 & -1 & -2 & -3 & -4 & -5 & -6 & -7 & -8 & -9 \\ 0 & -1 & -2 & -3 & -4 & -5 & -6 & -7 & -8 & -9 \\ 0 & -1 & -2 & -3 & -4 & -5 & -6 & -7 & -8 & -9 \\ 0 & -1 & -2 & -3 & -4 & -5 & -6 & -7 & -8 & -9 \end{bmatrix}$$

This matrix has the same number of rows as the input update vector B. It has a number of columns equal to $H_{lim}$. Each row of the matrix is a progressively descending arithmetic sequence, starting from zero, in increments of-1.
In step 512, this "progressively descending" matrix is added to the vector of indices $I_H$. In the present implementation, this is an element-wise addition using broadcasting. It could alternatively be implemented by repeating $I_H$ over $H_{lim}$ columns. The result of the addition is:

$$I'_H = \begin{bmatrix} 1 & 0 & -1 & -2 & -3 & -4 & -5 & -6 & -7 & -8 \\ 6 & 5 & 4 & 3 & 2 & 1 & 0 & -1 & -2 & -3 \\ 4 & 3 & 2 & 1 & 0 & -1 & -2 & -3 & -4 & -5 \\ 0 & -1 & -2 & -3 & -4 & -5 & -6 & -7 & -8 & -9 \end{bmatrix}$$

It will be noted that each row of this matrix contains an element that is equal to 0 at a position corresponding to the respective index value. In order to convert this matrix to a one-hot encoding of the indices, a delta function is applied, in step 513. The delta function returns a value of one for an input of zero, and a value of zero for all other inputs. The resulting sparse index matrix $T_H$ is as follows:

$$T_H = \begin{bmatrix} 0 & 1 & 0 & 0 & 0 & 0 & 0 & 0 & 0 & 0 \\ 0 & 0 & 0 & 0 & 0 & 0 & 1 & 0 & 0 & 0 \\ 0 & 0 & 0 & 0 & 1 & 0 & 0 & 0 & 0 & 0 \\ 1 & 0 & 0 & 0 & 0 & 0 & 0 & 0 & 0 & 0 \end{bmatrix}$$

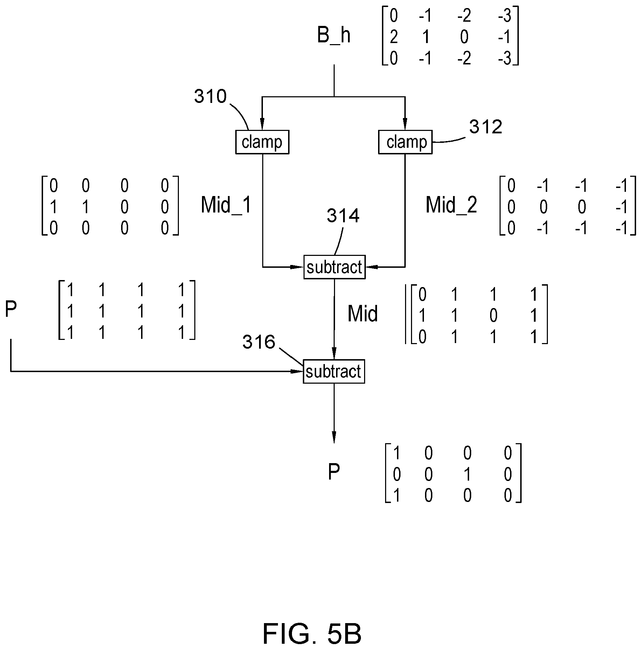

In the event that the NNA does not provide native support for the delta function, it is possible to synthesise this operation from a set of elementary neural network operations. One example of how to do this (using two clamp operations and two matrix subtractions) is shown in Figure 5B. For a given input Bh, a first clamp operation 310 is applied, to constrain the values to the range 0 to 1. That is, any values in the input that are less than or equal to 0 are set equal to 0; and any values that are greater than or equal to 1 are set equal to 1. In parallel, a second clamp operation 312 is applied, to constrain the values to the range -1 to 0. That is, any values in the input that are less than -1 are set equal to -1; and any values that are greater than or equal to 0 are set equal to 0. Next, in step 314, the result of the second clamp operation 312 is subtracted from the result of the first clamp operation 310. Finally, in step 316, the result of the first subtraction 314 is subtracted from a matrix of ones.
Returning to Figure 5A, in step 520, the update values from the input update vector B are applied to the sparse index matrix $T_H$, to produce an update vector R. This is done via a matrix multiplication:

$$R = B^T T_H$$

$$R = \begin{bmatrix} 6 & 7 & 3 & 4 \end{bmatrix} \begin{bmatrix} 0 & 1 & 0 & 0 & 0 & 0 & 0 & 0 & 0 & 0 \\ 0 & 0 & 0 & 0 & 0 & 0 & 1 & 0 & 0 & 0 \\ 0 & 0 & 0 & 0 & 1 & 0 & 0 & 0 & 0 & 0 \\ 1 & 0 & 0 & 0 & 0 & 0 & 0 & 0 & 0 & 0 \end{bmatrix}$$

$$R = \begin{bmatrix} 4 & 6 & 0 & 0 & 3 & 0 & 7 & 0 & 0 & 0 \end{bmatrix}$$

The update vector R is used to update the input data vector A. In some instances, it is possible that the input data tensor A is empty or all of its values are equal to 0. In this case, the output of the method is simply the update vector R itself. More generally, the output will depend on the contents of the input data vector A and the update rule to be applied.

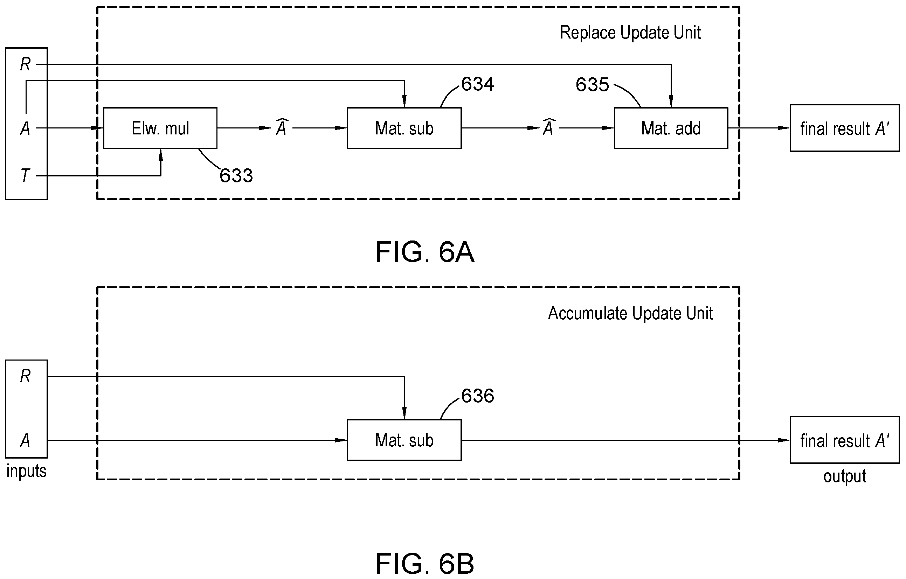

In a first example, illustrated in Figure 6A, the updated values replace those in the original input data vector. This is implemented in four steps. Firstly, a reduced sparse index tensor T, is produced, having the same dimensions as the input data vector A. This is prepared by summing over the rows of the sparse index matrix $T_H$ (see step 531 in Figure 5A):

$$T = \begin{bmatrix} 1 & 1 & 0 & 0 & 1 & 0 & 1 & 0 & 0 & 0 \end{bmatrix}$$

Next, this reduced sparse index tensor T is multiplied, element-wise, by the input data vector (see step 633). This selects just the elements of the input data vector that are to be updated:

$$\hat{A} = A \odot T$$

$$\hat{A} = \begin{bmatrix} 1 & 1 & 1 & 1 & 1 & 1 & 1 & 1 & 1 & 1 \end{bmatrix} \odot \begin{bmatrix} 1 & 1 & 0 & 0 & 1 & 0 & 1 & 0 & 0 & 0 \end{bmatrix}$$

$$\hat{A} = \begin{bmatrix} 1 & 1 & 0 & 0 & 1 & 0 & 1 & 0 & 0 & 0 \end{bmatrix}$$

Here, it should be understood that the symbol "$\odot$" denotes element-wise multiplication. (In this trivialised example, the resulting vector happens to be identical to the reduced sparse index tensor T; however, it should be understood that this is not generally the case.)

The next step (see step 634) is to subtract the elements extracted from the input data vector from the input data vector itself:

$$\tilde{A} = A - \hat{A}$$

$$\tilde{A} = \begin{bmatrix} 1 & 1 & 1 & 1 & 1 & 1 & 1 & 1 & 1 & 1 \end{bmatrix} - \begin{bmatrix} 1 & 1 & 0 & 0 & 1 & 0 & 1 & 0 & 0 & 0 \end{bmatrix}$$

$$\tilde{A} = \begin{bmatrix} 0 & 0 & 1 & 1 & 0 & 1 & 0 & 1 & 1 & 1 \end{bmatrix}$$

This returns a version of the original input data vector in which the values to be updated are replaced with zeros. Finally, in step 635, the update vector R is added to the result of the subtraction, to produce the final output A':

$$A' = \tilde{A} + R$$

$$A' = \begin{bmatrix} 0 & 0 & 1 & 1 & 0 & 1 & 0 & 1 & 1 & 1 \end{bmatrix} + \begin{bmatrix} 4 & 6 & 0 & 0 & 3 & 0 & 7 & 0 & 0 & 0 \end{bmatrix}$$

$$A' = \begin{bmatrix} 4 & 6 & 1 & 1 & 3 & 1 & 7 & 1 & 1 & 1 \end{bmatrix}$$

It should be understood that the order of the matrix addition 635 and matrix subtraction 64 may be reversed. The result will be the same in either case.

If the update rule instead involves accumulating the updates with the existing values of the elements in the input data vector A, then the process is simpler, as illustrated in Figure 6B. Here, there is just a single step. The update vector R is added to the input data vector A (see step 636):

$$A' = A + R$$

$$A' = \begin{bmatrix} 1 & 1 & 1 & 1 & 1 & 1 & 1 & 1 & 1 & 1 \end{bmatrix} + \begin{bmatrix} 4 & 6 & 0 & 0 & 3 & 0 & 7 & 0 & 0 & 0 \end{bmatrix}$$

$$A' = \begin{bmatrix} 5 & 7 & 1 & 1 & 4 & 1 & 8 & 1 & 1 & 1 \end{bmatrix}$$

**2-D example**

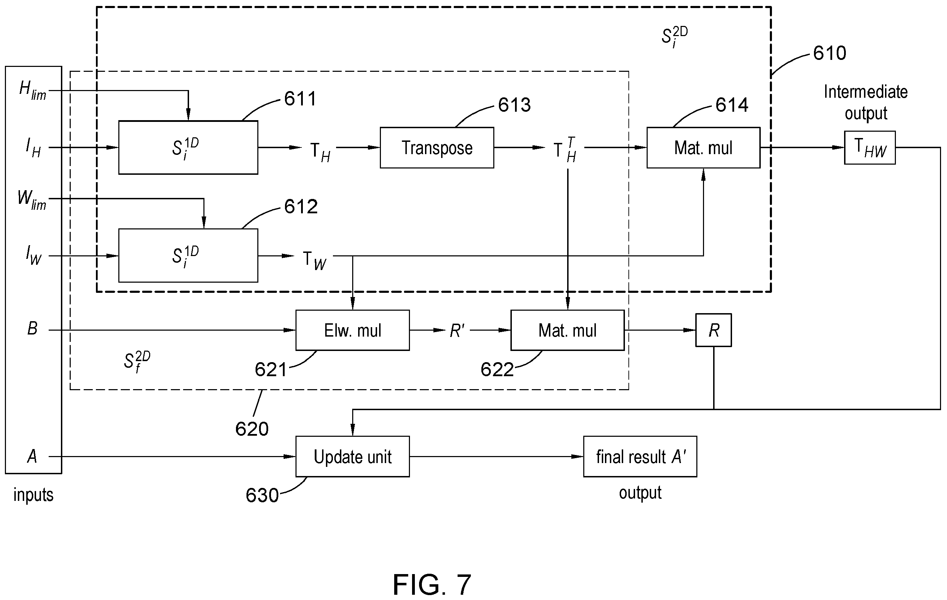

Figure 7 illustrates an example of 2-D scatter operation. This example builds on the steps illustrated in Figure 5A. For a 2-D scatter operation, there are two vectors of indices, $I_H$ and Iw. By way of example:

$$I_H = \begin{bmatrix} 0 \\ 2 \\ 0 \end{bmatrix}$$

$$I_W = \begin{bmatrix} 4 \\ 2 \\ 3 \end{bmatrix}$$

The input update tensor B is still a vector:

$$B = \begin{bmatrix} 8 \\ 9 \\ 7 \end{bmatrix}$$

The input data tensor A is a 2-D matrix, with a height of 4 rows and a width of 6 columns. That is $H_{lim}$=4 and $W_{lim}$=6. The overall principles of the method are the same as those in the methods of Figure 1B and 5. In step 610, the indices are converted to a one-hot encoding. In step 620, an update tensor (in this case, an update matrix) R is generated. In step 630, the input data matrix A is updated using the update matrix R.

The method begins, in step 611, by converting the first vector of indices $I_H$ to a first sparse index tensor $T_H$. Similarly, in step 612, the second vector of indices $I_W$ is converted to a second sparse index tensor $T_W$. Each of the conversion steps 611 and 612 is implemented identically to step 510 in the method of Figure 5A. Consequently, these steps need not be described further. Using the exemplary values above, the results are as follows:

$$T_H = \begin{bmatrix} 1 & 0 & 0 & 0 \\ 0 & 0 & 1 & 0 \\ 1 & 0 & 0 & 0 \end{bmatrix}$$

$$T_W = \begin{bmatrix} 0 & 0 & 0 & 0 & 1 & 0 \\ 0 & 0 & 1 & 0 & 0 & 0 \\ 0 & 0 & 0 & 1 & 0 & 0 \end{bmatrix}$$

The update matrix R is generated based on the two sparse index tensors $T_H$ and $T_W$. The update values are applied to one of the sparse index tensors (in this example, $T_W$) by means of an element-wise multiplication 621 (using broadcasting - such that each column Tw of is multiplied element-wise by the respective values in B). This produces an intermediate tensor R':

$$R' = \begin{bmatrix} 0 & 0 & 0 & 0 & 8 & 0 \\ 0 & 0 & 9 & 0 & 0 & 0 \\ 0 & 0 & 0 & 7 & 0 & 0 \end{bmatrix}$$

Next, a matrix multiplication 622 is performed between the intermediate tensor R' and the other sparse index tensor (in this example, $T_H$). However, in the present example, note that this sparse index tensor is first transposed (step 613), prior to the multiplication 622. (in other examples, the matrices may be constructed differently such that the separate transpose operation 613 is unnecessary.) The result of the matrix multiplication is the update tensor (update matrix) R:

$$R = T_H^T R'$$

$$R = \begin{bmatrix} 1 & 0 & 1 \\ 0 & 0 & 0 \\ 0 & 1 & 0 \\ 0 & 0 & 0 \end{bmatrix} \begin{bmatrix} 0 & 0 & 0 & 0 & 8 & 0 \\ 0 & 0 & 9 & 0 & 0 & 0 \\ 0 & 0 & 0 & 7 & 0 & 0 \end{bmatrix}$$

$$R = \begin{bmatrix} 0 & 0 & 0 & 7 & 8 & 0 \\ 0 & 0 & 0 & 0 & 0 & 0 \\ 0 & 0 & 9 & 0 & 0 & 0 \\ 0 & 0 & 0 & 0 & 0 & 0 \end{bmatrix}$$

As with the 1-D example, in the special case in which the input data matrix A is empty (or filled with zeros) the update matrix R itself forms the output data tensor. More generally, however, an update rule needs to be applied to combine the input data matrix A and the update matrix R. If the update values are to be accumulated with the values in the input data matrix A, then the update unit 630 implements a matrix addition analogous to step 636 of Figure 6B (adding two 2-D matrices instead of two 1-D vectors as in step 636).

Alternatively, if the update rule requires values in A to be replaced with the respective values in R, then a series of steps similar to those in Figure 6A is performed. Firstly, the two sparse index matrices $T_H$ and Tw are combined to produce a 2-D sparse index tensor $T_{HW}$ having the same size as the input data tensor A. This is done by means of a further matrix multiplication 614:

$$T_{HW} = T_H^T T_W = \begin{bmatrix} 1 & 0 & 1 \\ 0 & 0 & 0 \\ 0 & 1 & 0 \\ 0 & 0 & 0 \end{bmatrix} \begin{bmatrix} 0 & 0 & 0 & 0 & 1 & 0 \\ 0 & 0 & 1 & 0 & 0 & 0 \\ 0 & 0 & 0 & 1 & 0 & 0 \end{bmatrix}$$

$$T_{HW} = T_H^T T_W = \begin{bmatrix} 0 & 0 & 0 & 1 & 1 & 0 \\ 0 & 0 & 0 & 0 & 0 & 0 \\ 0 & 0 & 1 & 0 & 0 & 0 \\ 0 & 0 & 0 & 0 & 0 & 0 \end{bmatrix}$$

The 2-D sparse index tensor $T_{HW}$ is then used in the same way as the reduced sparse index tensor T, in the steps of Figure 6A. The 2-D sparse index tensor $T_{HW}$ is multiplied element-wise by the input data matrix A (similarly to step 633). The result of the element-wise multiplication is subtracted from the original input data matrix A (similarly to step 634). Finally, the result of the subtraction is added to the update matrix R (similarly to step 635), to produce the output data tensor A'.

**3-D example**

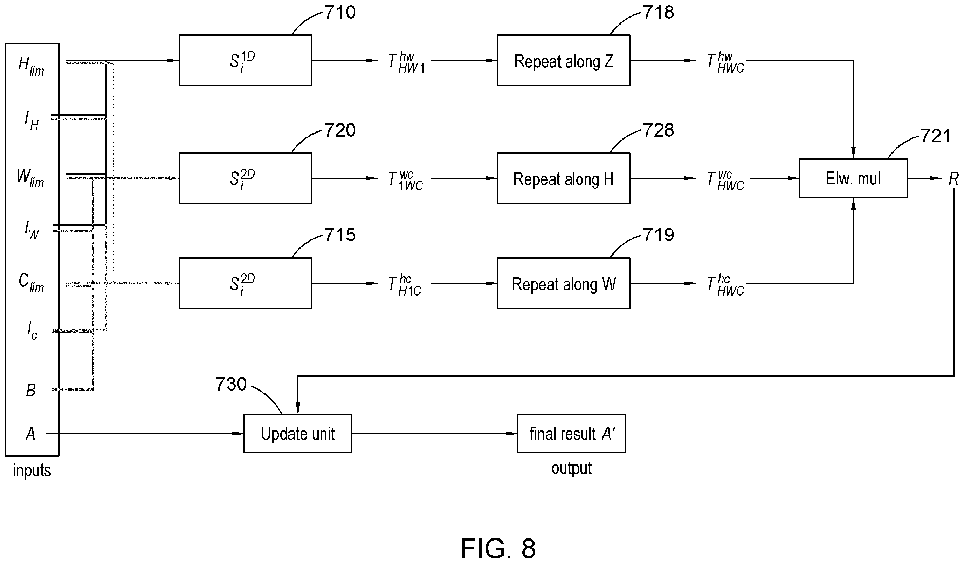

Figure 8 illustrates an example of a 3-D scatter operation. This example builds on the steps illustrated in Figures 5 and 7. In particular, operations 610 and 620 can be reused in the implementation of the 3-D scatter operation. For the 3-D scatter, there are three vectors of indices, $I_H$, $I_W$, and $I_C$, for the height, width, and channel indices, respectively. The input and output data tensors are 3-D tensors. The number of channels in the input/output data tensor is defined by $C_{lim}$, just as the number of rows and columns are defined by $H_{lim}$ and $W_{lim}$, respectively. The input update tensor B is still a vector.

In step 710, the first and second (vertical and horizontal) indices are converted to a 2-D sparse index tensor $T_{HW1}^{hw}$. This operation is identical to the operation 610 in Figure 7 and need not be described further. Similarly, in step 715, the first and third (vertical and channel) indices are converted to a 2-D sparse index tensor $T_{H1C}^{hc}$. Again, this operation is identical to the operation 610 in Figure 7. In step 720, the second and third (horizontal and channel) indices are combined with the input update vector B, to produce a 2-D update tensor $T_{1WC}^{wc}$, which carries the update values. This operation is identical to the operation 620 in Figure 7.

Each of the 2-D sparse index tensors $T_{HW1}^{hw}, T_{H1C}^{hc}$ and the 2-D update tensor $T_{1WC}^{wc}$ consists of a single, two-dimensional slice, in respective different pairs of dimensions. The next stage is to repeat these slices over the respective remaining dimension, thereby producing three 3-D tensors of identical dimensions. This is done in the three steps 718, 719, and 728. In step 718, the 2-D sparse index tensor $T_{HW1}^{hw}$ is repeated along the channel dimension, to produce a 3-D tensor $T_{HWC}^{hw}$. In step 719, the 2-D sparse index tensor $T_{H1C}^{hc}$ is repeated along the horizontal (width) dimension, to produce a 3-D tensor $T_{HWC}^{hc}$. And in step 728, the 2-D update tensor $T_{1WC}^{wc}$ is repeated along the vertical (height) dimension, to produce a 3-D tensor $T_{HWC}^{wc}$. The next step is to combine the three 3-D tensors produced in steps 718, 719, and 728. This is done via element-wise multiplication 721, which produces the 3-D update tensor R.

As in the 1D and 2-D cases, if the input data tensor A is empty (or filled with zeros), then the update tensor R can be used directly as the output data tensor. Otherwise, the appropriate update rule is implemented by the updating 730. In the presently contemplated embodiments, the update rules are those already explained above with reference to Figures 6A and 6B. Equivalents of the processes shown in those drawings can be used to perform the updates. The inputs and the output of each step 633, 634, 635, 636 are now 3-D tensors, instead of 1D vectors or 2-D matrices.

Referring to the update rule of Figure 6A, which provides for updating by replacing elements of the input data tensor, one additional modification is implemented. In place of the reduced sparse index tensor T (in the 1-D case) and the 2-D sparse index tensor $T_{HW}$ (in the 2-D case), a 3-D intermediate tensor $T_{HWC}$ is prepared. To do this, a third 2-D sparse index tensor Two is first calculated, from the second and third (horizontal and channel) indices, using a third instance of the operation 610 from Figure 7. This is then repeated over the vertical (height) dimension. The intermediate tensor $T_{HWC}$ is then calculated by element-wise multiplication of all three 2-D sparse index tensors: $T_{HW1}^{hw}$, $T_{WC}$, and $T_{H1C}^{hc}$.

$$T_{HWC} = T_{HW1}^{hw} \odot T_{WC} \odot T_{H1C}^{hc}$$

(It should be understood that if the element-wise multiplication is performed with broadcasting, the explicit repetition is not necessary.)

The update rule proceeds as outlined above - using this tensor to select and subtract from the input data tensor those values that are to be updated.

$$A' = A - A \odot T_{HWC} + R$$

**2-D all-channel example**

A special case arises when all of the elements along a particular dimension of a 3-D input data tensor are to be updated concurrently. In this case, two vectors of indices are sufficient - there is no need to provide an index from the third dimension because there is no selection in this dimension (since all of the elements in that dimension being updated). This will be illustrated with an example in which all elements along the channel dimension are updated concurrently. However, it should be understood that the scope of the present disclosure is not limited in this way - in other examples, all elements along the height (or width) dimension could alternatively be updated.

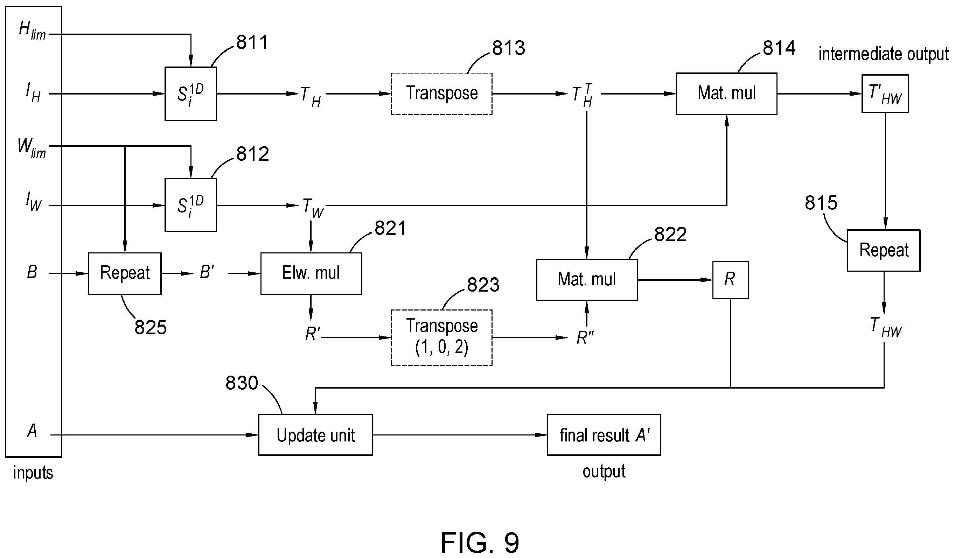

Figure 9 illustrates an implementation of a 2-D all-channel scatter operation according to an example. In one sense, this is a special case of the 3-D scatter operation. However, it may be easier to conceptualise and implement it as a special extension of the 2-D scatter operation. As will be seen from comparison of Figure 9 with Figure 7, a complete set of steps corresponding to the 2-D scatter operation are performed in the all-channel scatter operation of Figure 9, with just a small number of extensions/additions, compared with the method of Figure 7.

The update values are provided in the form of an N x 1 x C tensor (B) of update values, where each row corresponds to one 2-D location the channel update values are arranged in the channel dimension. Steps 811, 812, 813 and 814 are identical to their respective counterpart steps 611, 612, 613, 614 in Figure 7. There is an additional step 825 before the element-wise multiplication 821 (which corresponds to the element-wise multiplication 621 of Fig. 7). In this step 825, the input update vector B is repeated over the horizontal (width) dimension, to produce at 3-D tensor R'. The number of copies/repetitions is equal to the size of the input/output data tensor in the horizontal dimension. The repeated input update tensor B' is multiplied element-wise by the sparse index tensor $T_W$, to produce the intermediate tensor R', in step 821. The resulting intermediate tensor R' is now a 3-D tensor. In step 823, in some examples, the vertical and horizontal dimensions of this tensor may be swapped using a transpose operation. The result R" of the transpose is input to the matrix multiplication 822. In Figure 7, the corresponding step 622 consisted of a single 2-D matrix multiplication. However, step 822 becomes a batch matrix multiplication.

Note that the transpose 813 and the transpose 823 are shown in dashed outline because one or both of them may be avoided by arranging dimensions differently in the relevant tensors.

The other modification is to repeat the output of the matrix multiplication 814 over the channel dimension (see step 815). This produces a 3-D tensor $T_{HW}$, which is suitable for use in the update step 830 (corresponding to the update step 630). The appropriate update rule can be processed as usual in step 830, except with 3-D tensors (in common with the 3-D case - see step 730) instead of 2-D tensors (as in the 2-D case - see step 630).

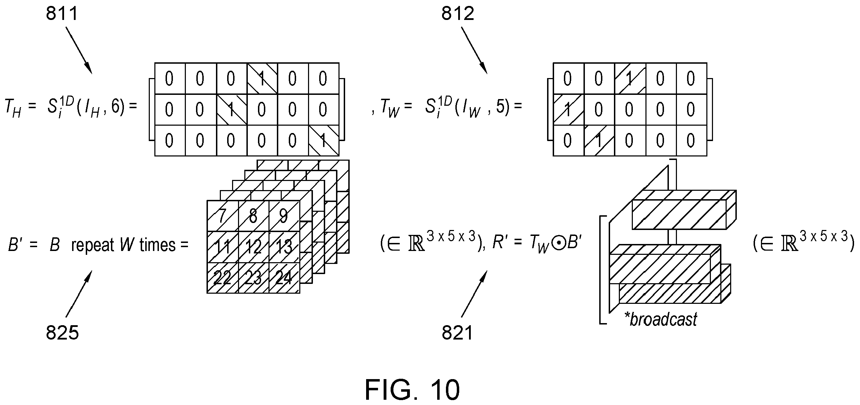

Figure 10 shows examples of some of the steps of Figure 9 in graphical form, to assist with visualisation of the processes. In the top row, the results of steps 811 and 812 are shown. That is, the respective vectors of indices $I_H$ and Iw are converted to a one-hot sparse matrix form, using the operation 510, described above with reference to Figure 5A. The bottom row shows graphical examples of steps 825 and 821. In this example, the input update tensor is:

$$B = \begin{bmatrix} 7 & 8 & 9 \\ 11 & 12 & 13 \\ 22 & 23 & 24 \end{bmatrix}$$

Each row of this matrix contains the set of update values for one two-dimensional location. Each column of the matrix relates to a different channel. In step 825, the input update tensor B is repeated W times. (in this example, as can be seen, W=5.) As drawn in Figure 10, the channels of B' are arranged on the horizontal axis; the width dimension of B' is arranged in the direction into the page. As shown in the bottom right of Figure 10, step 821 operates on the repeated input update tensor B' (produced in step 825) and the sparse index matrix $T_W$ (produced in step 812). The element-wise multiplication operation of step 821 is performed with broadcasting over the channel dimension. This has the effect of selecting all channels at the (2-D) positions where the sparse index matrix has a value of one. All of the other elements of B' are multiplied by zero and thereby eliminated.

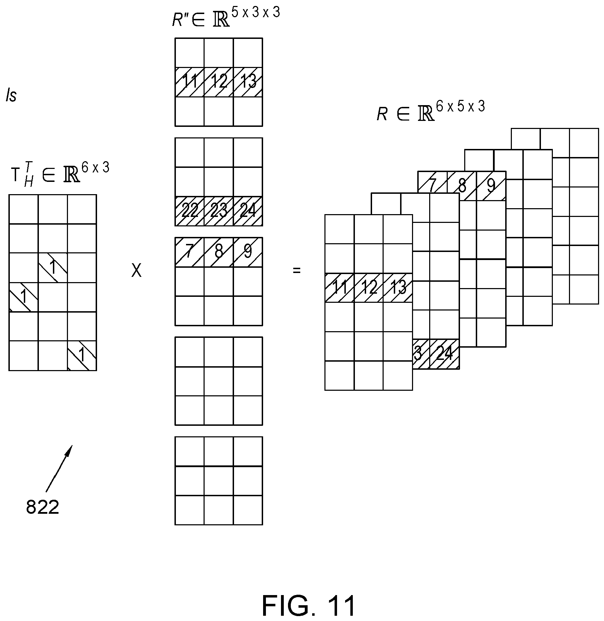

Following on from the example of Figure 10, and using the same exemplary numerical values, Figure 11 shows a graphical example of the batch matrix multiplication (with broadcasting) of step 822. This is equivalent to five matrix multiplications, between the 6x3 (transposed) sparse index matrix $T_H^T$ and each of the five "slices", in the width dimension, of the (transposed) intermediate tensor R". Each individual multiplication yields one of five 6x3 slices of the update tensor R.

**Error handling**

The examples above assume that the indices associated with the update values are unique. That is, no element of the input/output data tensor is identified twice in the same set of index vectors $I_H$, $I_W$, $I_C$. If this rule is broken, then unintended and erroneous results may be produced. There are various possible ways to mitigate this.

The following 2-D example illustrates one of the potential problems. Here, the element located at coordinates (0, 3) is indexed twice, with the result that the 2-D sparse index tensor is no longer binary-valued.

$$T_{HW} = T_H^T T_W = \begin{bmatrix} 1 & 0 & 1 \\ 0 & 0 & 0 \\ 0 & 1 & 0 \\ 0 & 0 & 0 \end{bmatrix} \begin{bmatrix} 0 & 0 & 0 & 1 & 0 & 0 \\ 0 & 0 & 1 & 0 & 0 & 0 \\ 0 & 0 & 0 & 1 & 0 & 0 \end{bmatrix}$$

$$T_{HW} = T_H^T T_W = \begin{bmatrix} 0 & 0 & 0 & 2 & 0 & 0 \\ 0 & 0 & 0 & 0 & 0 & 0 \\ 0 & 0 & 1 & 0 & 0 & 0 \\ 0 & 0 & 0 & 0 & 0 & 0 \end{bmatrix}$$

One solution is to apply a stepwise function to the elements of $T_{HW}$. The output of this function is equal to 1 for input values greater than or equal to 1, and is equal to 0 for input values less than 1. An alternative solution having the same effect is to apply a clamp function, which clamps the values of $T_{HW}$ between 0 and 1. Both of these solutions ensure that the tensor is constrained to have binary values (0 or 1).

Duplicated indices also affect the update tensor R. As explained above, for the 2-D case:

$$R = T_H^T R' = T_H^T (T_W \odot B)$$

$$= \begin{bmatrix} 1 & 0 & 1 \\ 0 & 0 & 0 \\ 0 & 1 & 0 \\ 0 & 0 & 0 \end{bmatrix} \left( \begin{bmatrix} 0 & 0 & 0 & 1 & 0 & 0 \\ 0 & 0 & 1 & 0 & 0 & 0 \\ 0 & 0 & 0 & 1 & 0 & 0 \end{bmatrix} \odot \begin{bmatrix} 8 \\ 9 \\ 7 \end{bmatrix} \right)$$

$$= \begin{bmatrix} 1 & 0 & 1 \\ 0 & 0 & 0 \\ 0 & 1 & 0 \\ 0 & 0 & 0 \end{bmatrix} \begin{bmatrix} 0 & 0 & 0 & 8 & 0 & 0 \\ 0 & 0 & 9 & 0 & 0 & 0 \\ 0 & 0 & 0 & 7 & 0 & 0 \end{bmatrix}$$

$$= \begin{bmatrix} 0 & 0 & 0 & 15 & 0 & 0 \\ 0 & 0 & 0 & 0 & 0 & 0 \\ 0 & 0 & 9 & 0 & 0 & 0 \\ 0 & 0 & 0 & 0 & 0 & 0 \end{bmatrix}$$

Here, the duplicated update values, 7 and 8, for the element at coordinates (0, 3), have been summed to produce an update value of 15. This may or may not be the desired behaviour. To handle this predictably, the sparse index matrices can be convolved with a specifically designed constant kernel which identifies the first or last "1" in the relevant row or column (and eliminates any others). This is most easily explained by way of example.

Given an exemplary input $T_1$, we would like to produce one of two outputs $T_2$.

$$T_1 = \begin{bmatrix} 1 & 0 & 1 \\ 0 & 0 & 0 \\ 0 & 1 & 0 \\ 0 & 0 & 0 \end{bmatrix}$$

$$T_2 = \begin{bmatrix} 1 & 0 & 0 \\ 0 & 0 & 0 \\ 0 & 1 & 0 \\ 0 & 0 & 0 \end{bmatrix} \, or \, \begin{bmatrix} 0 & 0 & 1 \\ 0 & 0 & 0 \\ 0 & 1 & 0 \\ 0 & 0 & 0 \end{bmatrix}$$

This can be achieved by convolution with a kernel consisting of a linearly increasing or linearly decreasing sequence of values (suitably padded with zeros). To identify the last instance of "1" in each row, the kernel F is as follows:

$$T_1 * F = \begin{bmatrix} 1 & 0 & 1 \\ 0 & 0 & 0 \\ 0 & 1 & 0 \\ 0 & 0 & 0 \end{bmatrix} * [0 \quad 0 \quad 1 \quad 2 \quad 3] = \begin{bmatrix} 1 & 2 & 4 \\ 0 & 0 & 0 \\ 0 & 1 & 2 \\ 0 & 0 & 0 \end{bmatrix}$$

Here, the asterisk ("*") denotes convolution. The result of the convolution is then passed through a piecewise activation function to extract only those values equal to 1. To identify the first instance of "1" each row, the kernel F' is as follows:

$$T_1 * F = \begin{bmatrix} 1 & 0 & 1 \\ 0 & 0 & 0 \\ 0 & 1 & 0 \\ 0 & 0 & 0 \end{bmatrix} * [3 \quad 2 \quad 1 \quad 0 \quad 0] = \begin{bmatrix} 4 & 2 & 1 \\ 0 & 0 & 0 \\ 2 & 1 & 0 \\ 0 & 0 & 0 \end{bmatrix}$$

Again, this is followed by a piecewise activation function to identify the values equal to 1.

**Mapping to hardware**

In the exemplary NNA architecture described above with reference to Figures 2-4, the steps of the scatter operation may be mapped to hardware units as follows. The convolution engines 240a-n may be utilised to perform matrix multiplications and steps of summing tensors over certain dimensions. The element-wise operations unit 285 may be utilised to perform the element-wise operations, including element-wise multiplication. The activation unit may be utilised to implement the delta function - either directly, or indirectly by implementing the clamp operations of Figure 5B. The memory manipulation module 40 may be utilised to implement transpose, permute and/or repeat operations.

Matrix multiplication and batch matrix multiplication may be implemented in the NNA hardware in several ways. Suggested ways of doing this are disclosed in published UK patent application GB 2602524 A, for example.

Of course, it should be understood that different mappings of operations to hardware are possible - especially for other NNA architectures.

**Input data**

The input data tensor, to which the scatter operation is applied, may originate from any of a number of sources. However, as mentioned above, scatter and gather operations may be useful when processing spatial data such as 3-D volumetric data, in particular - and especially when working with sparse spatial data such as 3-D volumetric data. In some examples according to the present disclosure, a system may comprise one or more sensors configured to sense spatial data such as 3-D volumetric data of real physical objects. For instance, a depth sensor such as a LiDAR sensor may be used to capture a depth image of a scene. The depth data may be represented as sparse volumetric data, wherein empty voxels are assigned a value of zero, and voxels associated with sensed surface features are assigned nonzero values. The scatter operation may be used in a method of object detection employing a neural network operating on sparse volumetric data, such as sparse depth data.

In other cases, the input data tensor may comprise or consist of an image or video. In the context of image processing - for example, in a task such as inpainting - it may be desired to modify a specific part of an image. In the context of video processing, may be desired to warp a frame towards another frame using nearest neighbour motion data in motion estimation, tracking or action recognition applications. Each of these applications may involve indexing into arbitrary and/or isolated portions of the data tensor and may benefit from an efficient implementation of a scatter operation.

In some applications, the scatter operation is useful for input data of any kind. For instance, in the context of steganography or watermarking, a specific part of the data may be modified in order to hide a message. The input data in this case could be image or video data, or it could be data of any other kind.

**Variations**

Many variations are possible to the examples described above. In particular, it should be understood that the specific ordering of the dimensions in the examples above is non-limiting. The operations applied along particular dimensions in the examples above could be substituted with similar operations along other dimensions. In effect, the tensors in the examples above could be permuted to reorder their dimensions in any sequence desired, without affecting the underlying principles of the method.

Similarly, within each example, where transpose operations are indicated, these operations may be changed or eliminated by altering the ordering of dimensions at an earlier stage of the calculations. Conversely, additional transpose operations may be introduced if the dimensions are reordered in different ways. Those skilled in the art will be familiar with the fact that the transpose of the product of two matrices is equal to the product of the transpose of the two matrices in reverse order. That is:

$$(XY)^T = Y^T X^T$$

This property can also be used to design equivalent calculations to those in the examples described previously.

**Computer system and IC manufacturing system**

Figure 9 shows a computer system in which the neural network systems described herein may be implemented. The computer system comprises a CPU 902, a GPU 904, a memory 906, a neural network accelerator (NNA) 908 and other devices 914, such as a display 916, speakers 918 and a camera 922. A processing block 910 (corresponding to processing blocks 40 and 200) is implemented on the NNA 908. In other examples, one or more of the depicted components may be omitted from the system, and/or the processing block 910 may be implemented on the CPU 902 or within the GPU 904. The components of the computer system can communicate with each other via a communications bus 920. A store 912 (corresponding to memory 25) is implemented as part of the memory 906.

The NNA of Figures 2-3 and the system of Figure 4 are shown as comprising a number of functional blocks. This is schematic only and is not intended to define a strict division between different logic elements of such entities. Each functional block may be provided in any suitable manner. It is to be understood that intermediate values described herein as being formed by an NNA need not be physically generated by the NNA at any point and may merely represent logical values which conveniently describe the processing performed by the NNA between its input and output.

The NNAs described herein may be embodied in hardware on an integrated circuit. The NNAs described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an applicationspecific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture an NNA configured to perform any of the methods described herein, or to manufacture an NNA comprising any apparatus described herein. An integrated circuit definition dataset may be, for example, an integrated circuit description.

Therefore, there may be provided a method of manufacturing, at an integrated circuit manufacturing system, an NNA as described herein. Furthermore, there may be provided an integrated circuit definition dataset that, when processed in an integrated circuit manufacturing system, causes the method of manufacturing an NNA to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

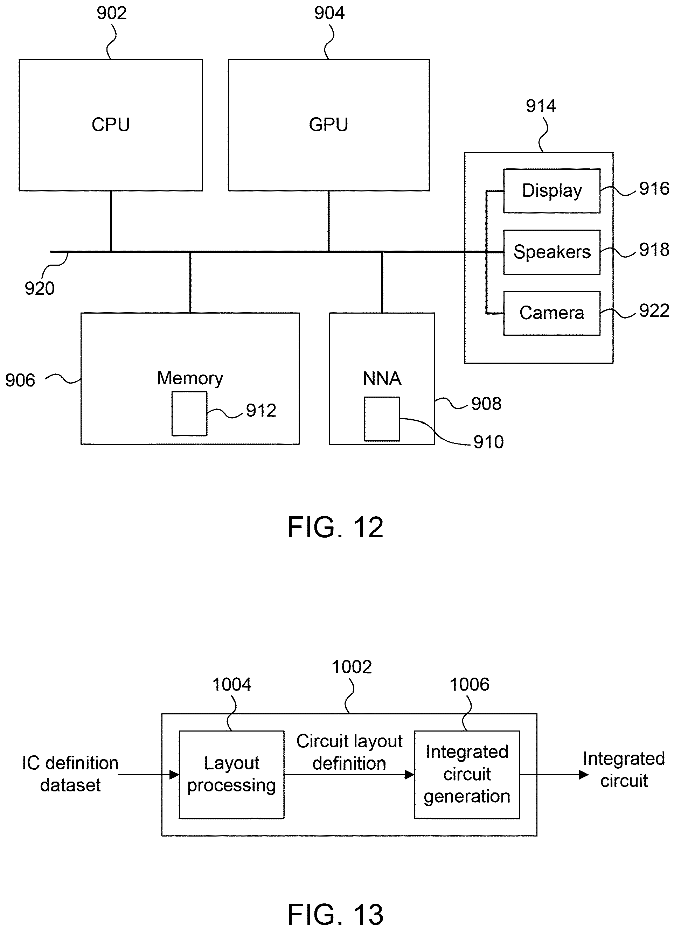

An example of processing an integrated circuit definition dataset at an integrated circuit manufacturing system so as to configure the system to manufacture an NNA will now be described with respect to Figure 13.

Figure 13 shows an example of an integrated circuit (IC) manufacturing system 1002 which is configured to manufacture an NNA as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining an NNA as described in any of the examples herein), process the IC definition dataset, and generate an IC according to the IC definition dataset (e.g. which embodies an NNA as described in any of the examples herein). The processing of the IC definition dataset configures the IC manufacturing system 1002 to manufacture an integrated circuit embodying an NNA as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture an NNA without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 13 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 13, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1.  A method of implementing a scatter operation in fixed-function hardware of a neural network accelerator, the method comprising:

    receiving an input update tensor B, containing update values;
    receiving a first vector of indices, containing N first indices, relating to a first dimension;
    receiving a second vector of indices, containing N second indices, relating to a second dimension;
    receiving a third vector of indices, containing N third indices, relating to a third dimension, wherein the first, second, and third indices identify elements of an output data tensor to be updated with the update values from the input update tensor B;
    converting (611) the first vector of indices to a first sparse index tensor $T_H$ having ones at locations defined by the indices and zeros elsewhere; and
    converting (612) the second vector of indices to a second sparse index tensor Tw having ones at locations defined by the second indices and zeros elsewhere;
    converting the third vector of indices to a third sparse index tensor Tc having ones at locations defined by the second indices and zeros elsewhere;
    generating (710) a first 2-D sparse index tensor $T_{HW1}^{hw}$, comprising a first multiplication (614) between the first sparse index tensor $T_H$ and the second sparse index tensor $T_W$;
    generating (720) a 2-D update tensor $T_{1WC}^{wc}$ incorporating the update values, comprising:

        a second multiplication (621), to apply the update values to one of the second sparse index tensor $T_W$ and the third sparse index tensor $T_C$, producing an intermediate tensor R', and
        a third multiplication (622), between the intermediate tensor R' and the other of the second sparse index tensor $T_W$ and the third sparse index tensor $T_C$, producing the 2-D update tensor $T_{1WC}^{wc}$;

    generating (715) a second 2-D sparse index tensor $T_{H1C}^{hc}$, comprising a fourth multiplication (614) between the first sparse index tensor $T_H$ and the third sparse index tensor $T_C$; and
    generating (718, 719, 721, 728) an update tensor R, comprising at least one element-wise multiplication (721) between the first 2-D sparse index tensor, the second 2-D sparse index tensor, and the 2-D update tensor, wherein the update tensor R contains the update values at the locations defined by the first, second and third indices.

**2.** The method of claim 1, further comprising:

receiving an input data tensor A containing a plurality of input data values to be updated; and
combining (730) the input data tensor A with the update tensor R, to produce an output data tensor A', wherein values of the input data tensor are updated with the update values.

**3.** The method of claim 2, wherein the combining (730) comprises replacing values of the input data tensor A with respective values of the update tensor R, and wherein the method comprises:

combining (613, 614) the second and third sparse index tensors $T_W$, $T_C$, to produce a third 2-D sparse index tensor $T_{WC}$;

combining the first, second, and third 2-D sparse index tensors $T_{HW1}^{hw}$ $T_{WC}$, $T_{H1C}^{hc}$ to calculate an intermediate tensor $T_{HWC}$;

performing element-wise multiplication (633) between the input data tensor A and the intermediate tensor $T_{HWC}$; and
subtracting (634) the result of the element-wise multiplication from the input data tensor A and adding (635) the update tensor R, to produce the output data tensor A'.

**4.** The method of claim 3, wherein combining the second and third sparse index tensors comprises a matrix multiplication and optionally further comprises a transpose operation applied to one of the second sparse index tensor and the third sparse index tensor prior to the matrix multiplication.

**5.** The method of claim 3 or claim 4, wherein combining the first, second, and third 2-D sparse index tensors comprises element-wise multiplications.

**6.** A neural network accelerator configured to implement a scatter operation in fixed-function hardware, wherein the neural network accelerator is configured to:

receive an input update tensor B, containing update values;
receive a first vector of indices, containing N first indices, relating to a first dimension;
receive a second vector of indices, containing N second indices, relating to a second dimension;
receive a third vector of indices, containing N third indices, relating to a third dimension, wherein the first, second, and third indices identify elements of an output data tensor to be updated with the update values from the input update tensor B;
convert (611) the first vector of indices to a first sparse index tensor $T_H$ having ones at locations defined by the indices and zeros elsewhere; and
convert (612) the second vector of indices to a second sparse index tensor $T_W$ having ones at locations defined by the second indices and zeros elsewhere;
convert the third vector of indices to a third sparse index tensor $T_C$ having ones at locations defined by the second indices and zeros elsewhere;
generate (710) a first 2-D sparse index tensor $T_{HW1}^{hw}$ , comprising a first multiplication (614) between the first sparse index tensor $T_H$ and the second sparse index tensor $T_W$;
generate (720) a 2-D update tensor $T_{1WC}^{wc}$ incorporating the update values, comprising:

a second multiplication (621), to apply the update values to one of the second sparse index tensor $T_W$ and the third sparse index tensor $T_C$, producing an intermediate tensor R', and
a third multiplication (622), between the intermediate tensor R' and the other of the second sparse index tensor $T_W$ and the third sparse index tensor $T_C$, producing the 2-D update tensor $T_{1WC}^{wc}$ ;

generate (715) a second 2-D sparse index tensor $T_{H1C}^{hc}$ , comprising a fourth multiplication (614) between the first sparse index tensor $T_H$ and the third sparse index tensor $T_C$; and
generate (718, 719, 721, 728) an update tensor R, comprising at least one element-wise multiplication (721) between the first 2-D sparse index tensor, the second 2-D sparse index tensor, and the 2-D update tensor, wherein the update tensor R contains the update values at the locations defined by the first, second and third indices.

7. The method or neural network accelerator of any one of the preceding claims, wherein converting each vector of indices to a respective sparse index tensor $T_H$, $T_W$, $T_C$ comprises

generating (511) a progressively descending matrix ($b_H$), in which each row, column, or channel comprises an arithmetic sequence from zero, in increments of negative one;
performing element-wise addition (512) between the progressively descending matrix ($b_H$) and the index vector ($I_H$), using broadcasting or repetition; and
applying a delta function (513) to the result ($I'_H$) of the element-wise addition, to construct the sparse index matrix ($T_H$).

8. The method or neural network accelerator of claim 7, wherein applying the delta function comprises:

a first clamp operation (310), clamping between a minimum of 0 and a maximum of 1;
a second clamp operation (312), clamping between a minimum of-1 and a maximum of 0;
a first subtraction operation (314), subtracting the result of the second clamp operation from the result of the first clamp operation; and
a second subtraction operation (316), subtracting from 1 each element of the result of the first subtraction.

9. The method or neural network accelerator of any one of the preceding claims, wherein the neural network accelerator comprises:

a plurality of convolution engines (240a-n);
an element-wise operations unit (285); and
an activation unit (255),
wherein at least one or any combination of two or more of the following is true:

each element-wise operation is performed using the element-wise operations unit (285);
each matrix multiplication is performed using the plurality of convolution engines (240a-n);
each step of summing over one dimension is performed using the plurality of convolution engines (240a-n);
each delta function is performed using the activation unit (255).

10. The method or neural network accelerator of any one of the preceding claims, wherein the neural network accelerator comprises a memory manipulation module (40), wherein each transpose operation, each permute operation, and each repeat operation is performed using the memory manipulation module (40).

11. The method of any one of claims 1 to 5 or 7 to 10, further comprising processing each sparse index tensor to do one of:

select the first non-zero element in each row, and suppress other non-zero elements in the row; and
select the last non-zero element in each row, and suppress other non-zero elements in the row.

12. The method or neural network accelerator of any one of the preceding claims, wherein the scatter operation forms part of a method of processing 3-D volumetric data, image data, or video data,
and/or wherein the scatter operation is used for steganography or watermarking.

13. A neural network accelerator configured to perform the method of any of claims 1 to 5 or 6 to 12.

14. Computer readable code configured to cause the method of any of claims 1 to 5 or 6 to 13 to be performed when the code is run.

15. A computer readable storage medium having encoded thereon the computer readable code of claim 14.

Indexing vector $I_H$ :

| 5 | 8 | 0 | 2 |

Indexing vector $I_W$ :

| 3 | 1 | 0 | 2 |

(5,3) (8,1) (0,0) (2,2)

Values $B$ :

| 9 | 7 | 4 | 3 |

$A$ :

| $A[I_H[0], I_W[0]] = A[5,3] = 9$ |
| $A[I_H[1], I_W[1]] = A[8,1] = 7$ |
| $A[I_H[2], I_W[2]] = A[0,0] = 4$ |
| $A[I_H[3], I_W[3]] = A[2,2] = 3$ |

# FIG. 1A

FIG. 1B

FIG. 2

FIG. 3

FIG. 4

FIG. 5A

EP 4 361 891 A1

$$B\_h \quad \begin{bmatrix} 0 & -1 & -2 & -3 \\ 2 & 1 & 0 & -1 \\ 0 & -1 & -2 & -3 \end{bmatrix}$$

310

clamp        clamp        312

$$\begin{bmatrix} 0 & 0 & 0 & 0 \\ 1 & 1 & 0 & 0 \\ 0 & 0 & 0 & 0 \end{bmatrix} \quad \text{Mid\_1}$$

314

Mid_2 $$\begin{bmatrix} 0 & -1 & -1 & -1 \\ 0 & 0 & 0 & -1 \\ 0 & -1 & -1 & -1 \end{bmatrix}$$

subtract

$$P \quad \begin{bmatrix} 1 & 1 & 1 & 1 \\ 1 & 1 & 1 & 1 \\ 1 & 1 & 1 & 1 \end{bmatrix}$$

Mid $$\begin{bmatrix} 0 & 1 & 1 & 1 \\ 1 & 1 & 0 & 1 \\ 0 & 1 & 1 & 1 \end{bmatrix}$$

316

subtract

$$P \quad \begin{bmatrix} 1 & 0 & 0 & 0 \\ 0 & 0 & 1 & 0 \\ 1 & 0 & 0 & 0 \end{bmatrix}$$

# FIG. 5B

Replace Update Unit

R

A → Elw. mul → $\widehat{A}$ → Mat. sub → $\widehat{A}$ → Mat. add → final result $A'$

634

635

T

633

**FIG. 6A**

Accumulate Update Unit

R

A → Mat. sub → final result $A'$

636

inputs

output

**FIG. 6B**

FIG. 7

FIG. 8

EP 4 361 891 A1

FIG. 9

EP 4 361 891 A1

811

812

$T_H = S_i^{1D}(I_H, 6) =$

$, T_W = S_i^{1D}(I_W, 5) =$

$B' = B$ repeat $W$ times $=$

$(\in \mathbb{R}^{3 \times 5 \times 3}), R' = T_W \odot B'$

$(\in \mathbb{R}^{3 \times 5 \times 3})$

*broadcast

825

821

FIG. 10

EP 4 361 891 A1

FIG. 11

902

904

914

CPU

GPU

Display ⌇~916

Speakers ⌇~918

920

Camera ⌇~922

906 ~ Memory
⌐912

NNA
~908
~910

# FIG. 12

1002

1004

1006

IC definition
dataset → Layout
processing → Circuit layout
definition → Integrated
circuit
generation → Integrated
circuit

# FIG. 13

## EUROPEAN SEARCH REPORT

**Application Number**

EP 23 20 6520

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/086104 A1 (FRAUNHOFER GES FORSCHUNG [DE]) 9 May 2019 (2019-05-09) * abstract; figures 9, 33, 35 * * page 25, line 2 - line 30 * * page 39, line 17 - page 41, line 3 * * page 55, line 1 - line 3 * * page 89, line 9 - line 31 * * page 100, line 19 - page 105, line 3 * ----- | 1-15 | INV. G06N3/063 G06N3/0464 G06N3/0495 |
| A | US 2021/318878 A1 (ZHAO ZHIBIAO [US] ET AL) 14 October 2021 (2021-10-14) * abstract; figures 3-6 * * paragraph [0037] - paragraph [0058] * ----- | 1-15 | |
| A | LIU ZHI-GANG ET AL:  "S2TA: Exploiting Structured Sparsity for Energy-Efficient Mobile CNN Acceleration", 2022 IEEE INTERNATIONAL SYMPOSIUM ON HIGH-PERFORMANCE COMPUTER ARCHITECTURE (HPCA), IEEE, 2 April 2022 (2022-04-02), pages 573-586, XP034124136, DOI: 10.1109/HPCA53966.2022.00049 * abstract; figures 2, 4-7 * * page 574, column 2, line 3 - page 579, column 2, line 16 * ----- | 1-15 | TECHNICAL FIELDS SEARCHED (IPC) G06N G06F G06T |
| A | WANG MIAO ET AL: "SPACE: Sparsity Propagation Based DCNN Training Accelerator on Edge", 23 February 2022 (2022-02-23), 20220223, PAGE(S) 391 - 405, XP047619993, * abstract; figures 2-5 * * page 394, line 17 - page 399, line 21 * ----- | 1-15 | |

-/--

The present search report has been drawn up for all claims

| Place of search | Date of completion of the search | Examiner |
|---|---|---|
| The Hague | 14 March 2024 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 23 20 6520

## DOCUMENTS CONSIDERED TO BE RELEVANT

| Category | Citation of document with indication, where appropriate, of relevant passages | Relevant to claim |
|---|---|---|
| A | GB 2 560 600 A (IMAGINATION TECH LTD [GB]) 19 September 2018 (2018-09-19) * abstract; figure 3 * * page 12, line 4 – page 13, line 22 * * page 25, line 9 – line 19 * ----- | 1-15 |
| A | US 2021/327563 A1 (HE ZE [US] ET AL) 21 October 2021 (2021-10-21) * abstract; figures 3A-3F * * paragraph [0095] – paragraph [0104] * ----- | 1-15 |

CLASSIFICATION OF THE APPLICATION (IPC)

TECHNICAL FIELDS SEARCHED (IPC)

The present search report has been drawn up for all claims

| Place of search | Date of completion of the search | Examiner |
|---|---|---|
| The Hague | 14 March 2024 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 23 20 6520

14-03-2024

| Patent document cited in search report | | Publication date | Patent family member(s) | | Publication date |
|---|---|---|---|---|---|
| WO 2019086104 | A1 | 09-05-2019 | EP | 3704638 A1 | 09-09-2020 |
| | | | WO | 2019086104 A1 | 09-05-2019 |
| US 2021318878 | A1 | 14-10-2021 | CN | 113272854 A | 17-08-2021 |
| | | | EP | 3830764 A1 | 09-06-2021 |
| | | | JP | 7256811 B2 | 12-04-2023 |
| | | | JP | 2022504995 A | 14-01-2022 |
| | | | KR | 20210044180 A | 22-04-2021 |
| | | | US | 2021318878 A1 | 14-10-2021 |
| | | | WO | 2021068243 A1 | 15-04-2021 |
| GB 2560600 | A | 19-09-2018 | NONE | | |
| US 2021327563 | A1 | 21-10-2021 | CN | 112639890 A | 09-04-2021 |
| | | | EP | 3841559 A1 | 30-06-2021 |
| | | | JP | 2021534859 A | 16-12-2021 |
| | | | US | 2021327563 A1 | 21-10-2021 |
| | | | WO | 2020038974 A1 | 27-02-2020 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2216139 A
- GB 2216141 A
- GB 2216142 A
- GB 2592087 A
- GB 2602524 A

**Non-patent literature cited in the description**

- **ALEX H. LANG ; SOURABH VORA ; HOLGER CAESAR ; LUBING ZHOU ; JIONG YANG.** Point-Pillars: Fast Encoders for Object Detection from Point Clouds. *CVPR,* 2019
- **JONAH PHILION ; SANJA FIDLER.** Lift, Splat, Shoot: Encoding Images from Arbitrary Camera Rigs by Implicitly Unprojecting to 3D. *ECCV,* 2020